# EUROPÄISCHE PATENTSCHRIFT

(11) **EP 3 455 532 B1**
(45) Veröffentlichungstag und Bekanntmachung des Hinweises auf die Patenterteilung: **24.06.2020**
(21) Anmeldenummer: 17726548.5
(22) Anmeldetag: 05.05.2017
(51) Int. Cl.: F16L 23/04, F16L 37/12, F16L 47/14

(54) **ANSCHLUSSVORRICHTUNG**
CONNECTION DEVICE
DISPOSISITF DE RACCORDEMENT

(30) Priorität: 13.05.2016 DE 102016108905
(43) Veröffentlichungstag der Anmeldung: 20.03.2019
(73) Patentinhaber: Sartorius Stedim Biotech GmbH, 37079 Göttingen (DE)
(72) Erfinder: AUE, Norbert, 37120 Bovenden (DE); HANDT, Sebastian, 37085 Göttingen (DE); PURMANN, Sebastian, 37073 Göttingen (DE); LIMPERT, Volker, 34326 Morschen (DE)
(74) Vertreter: Schneider, Peter Christian
(86) Internationale Anmeldenummer: PCT/EP2017/060812
(87) Internationale Veröffentlichungsnummer: WO 2017/194419

(56) Entgegenhaltungen:
- DE-A1-102014 100 248
- FR-A1- 2 895 057
- US-A- 3 709 526
- US-A1- 2006 022 465
- US-A1- 2016 074 280

## Beschreibung

### Gebiet der Erfindung

Die Erfindung bezieht sich auf eine Anschlussvorrichtung, umfassend
- einen Leitungsabschnitt mit einem endständigen, nach radial außen kragenden Anlageflansch zur Anlage eines korrespondierenden Anlageflansches eines an den Leitungsabschnitt anzukoppelnden, weiteren Leitungsabschnitts und
- eine ringförmige Anschlussklemme mit einem nach radial innen kragenden, ersten Klemmflansch und einem axial von diesem beabstandeten, axialen Widerlager, die aus einem ersten und einem zweiten Halbringsegment aufgebaut ist, welche jeweils ein erstes und ein zweites Segmentende aufweisen, wobei das erste Segmentende des ersten Halbringsegmentes Rastmittel erster Art und das zweite Segmentende des zweiten Halbringsegmentes korrespondierende Rastmittel zweiter Art trägt, die in tangentialer Richtung ineinander geschoben und dadurch miteinander verrastbar sind, wobei das zweite Segmentende des ersten Halbringsegmentes Rastmittel zweiter Art und das erste Segmentende des zweiten Halbringsegmentes Rastmittel erster Art trägt, die in tangentialer Richtung ineinander geschoben und dadurch miteinander verrastbar sind, wobei der Leitungsabschnitt als ein rohrartiger Anschlussstutzen mit axial von der Anlagefläche seines Anlageflansches beabstandeten ersten Gewindemitteln ausgebildet ist und das axiale Widerlager der Anschlussklemme als zu den ersten Gewindemitteln korrespondierende, zweite Gewindemittel ausgebildet ist.

### Stand der Technik

Derartige Anschlussvorrichtungen sind bekannt aus der FR 2 895 057 A1.

Zur Verbindung von Leitungsabschnitten, beispielsweise von Schlauch- oder Rohrabschnitten untereinander oder miteinander, sind sogenannte Tri-Clamps (Synonyme: "Tri-clover fitting" oder "Sanitary fitting") als standardisierte Anschlussklemmen bekannt, wie in der US 8, 328,457 B2 beschrieben. Unter einer Tri-Clamp versteht man eine klappbare Anschlussklemme (Klammer) mit zwei axial beabstandeten Klemmflanschen, die leicht angeschrägt zueinander angeordnet sind, sodass sich zwischen ihnen ein sich nach radial innen weitender, keilförmiger Ringraum bildet. Eine solche Tri-Clamp eignet sich zur aseptischen Montage zweier Leitungsabschnitte, die jeweils endständig einen nach radial außen kragenden Anlageflansch aufweisen und einander mit ihrer jeweiligen Anlagefläche kontaktieren. Die Anschlussklemme wird so um die aneinander anliegenden Anlageflansche geklappt, dass die Klemmflansche die jeweiligen Rückseiten der Anlageflansche kontaktieren. Die zum Zusammenklappen der Anschlussklemme eingesetzte Kraft wird über die Schrägen der Klemmflansche in eine Axialkraft umgelenkt, die als Anpresskraft auf die aneinander anliegenden Anlageflächen der Anlageflansche wirkt. Um die Anschlussklemme in zusammengeklapptem Zustand zu halten, sind deren freie Enden miteinander verbindbar. Aus der vorgenannten Druckschrift ist eine Verrastung der freien Enden der schwenkbar miteinander verbundenen Halbringsegmente der Anschlussklemme bekannt.

Nachteilig ist der für eine solche Tri-Clamp erforderliche, hohe Fertigungsaufwand, der neben der Bereitstellung zweier Halbringsegmente auch deren schwenkbare, gleichwohl vorzugsweise unverlierbare Verbindung beinhaltet. Das resultierende Produkt ist in der Regel ein vielkomponentiges, aus unterschiedlichen Materialien zusammengesetztes Bauteil. Ein solcher Aufwand kann wirtschaftlich sinnvoll sein, wenn ein oft wiederverwendetes Verbindungselement benötigt wird, das auch nach häufigem Öffnen und Schließen einwandfrei funktionieren soll. In der Praxis finden aber immer häufiger Einweg-Elemente, insbesondere Einweg-Behälter und daran anzukoppelnde Einweg-Leitungen Einsatz, die nach Gebrauch gemeinsam mit den sie koppelnden Verbindungselementen entsorgt werden. Hier wären vor allem kostengünstigere und vorzugsweise materialeinheitliche Bauteile wünschenswert.

Aus der US 2010/0253075 A1 ist eine einstückige, glockenförmige Anschlussklemme bekannt. Deren Glockendach bildet einen ersten Klemmflansch; an ihrem Glockenrand ist ein nach radial innen kragender, zweiter Klemmflansch vorgesehen. Aufgrund von Vertikalschlitzen in der Glockenwand lassen sich der Glockenrand und mit ihm der zweite Klemmflansch elastisch aufweiten. Daher kann die Glocke axial über die aneinander anliegenden Anlageflansche zweier Leitungsabschnitte geschoben werden und hält diese formschlüssig zusammen. Zur Erhöhung der Anpresskraft wird auf ein Außengewinde der Glocke eine Mutter aufgeschraubt, wodurch der Glockenrand und mit ihm der zweite Klemmflansch nach radial innen verengt werden. Aufgrund einer relativen Schrägstellung von erstem Klemmflansch (Glockendach) und zweitem Klemmflansch (Glockenrand) wird hierdurch eine axial auf die Anlageflansche wirkende Anpresskraft erzeugt. Nachteilig ist, dass einer der beiden zu koppelnden Leitungsabschnitte bereits im Vorfeld der Montage mit der Glocke und ihrer Mutter vorkonfektioniert sein muss. Eine nachträgliche Anbringung an Standard-Leitungsabschnitte oder ein Austausch der Anschlussklemme ist nicht möglich.

Aus der US 9,012,791 B1 ist eine klappbare Rohrenden-Schutzmutter bekannt. Sie soll Mäntel von in einem Führungsrohr geführten Kabeln vor Beschädigung durch scharfe Grate am Rohrende schützen. Es handelt sich dabei um einen Schraubdeckel mit großer zentraler Öffnung, dessen Rand gerade so breit ist, dass er nach radial innen über die scharfgratige Innenkante des Rohres übersteht. Um seine Montage auch bei bereits im Führungsrohr verlegten Kabeln durchführen zu können, ist die Schutzmutter aus zwei in einer gemeinsamen Ringebene verschwenkbar miteinander verbundenen Halbringsegmenten aufgebaut, deren freie Enden miteinander verrastbar sind.

Aus der US 3 709 526 A ist eine Anschlussklemme zum sicheren Zusammenhalten von Schlauchenden bekannt, die typischerweise aus vier trennbaren Halbringsegmenten gleicher Form besteht, wobei jedes Halbringsegment an seinen Enden Mittel zum Verrasten mit einem anderen Abschnitt aufweist. Werden je zwei Halbringsegmente über je einem Schlauchende aufeinander zugeschoben, verrasten die korrespondierenden Rastmittel miteinander. In einem zweiten Schritt werden die beiden identischen Klemmhälften, die nun um je ein Schlauchende anliegen, über zweite Rastmittel an ihren den Schlauchenden gegenüberliegenden Stirnseiten reversibel miteinander verriegelt, sodass beide Schlauchenden abdichtend zusammengeführt sind.

Aus der US 2016/074280 A1 ist ein Verschlusssystem für pharmazeutische Behälter bekannt. Das Verschlusssystem, das dazu gedacht ist, einen Deckel möglichst kindersicher auf einem Behälter anzubringen, kann als eine Verschlussklemme aus zwei Halbringsegmenten ausgebildet sein. Dabei sind die Halbringsegmente derart ausgestaltet, dass das erste Halbringsegment an beiden Segmentenden Rastmittel erster Art aufweist und das zweite Halbringsegment an beiden Segmentenden Rastmittel zweiter Art.

Darüber hinaus ist aus der US 2006/022465 eine Anschlussvorrichtung bekannt, bei der ein Leitungsabschnitt mit zwei stiftförmigen Vorsprüngen versehen ist, die radial nach außen ragen und voneinander in Umfangsrichtung um einen Winkel von 180° beabstandet sind. Ein zweiter Leitungsabschnitt weist zu den stiftförmigen Vorsprüngen korrespondierende Axialschlitze in seiner Wandung auf. Um diesen zweiten Leitungsabschnitt herum ist eine Anschlussklemme befestigt, die aus zwei Halbringsegmenten besteht, in deren Mitte sich je eine sich verjüngende, gewundene Nut befindet, die auf gleicher radialer Höhe liegen wie die Axialschlitze in der Wandung des zweiten Leitungsabschnitts. Die Nut der Anschlussklemme und die Axialschlitze der Wandung des zweiten Leitungsabschnitts sind derart gestaltet, dass sie das Einführen der stiftförmigen Vorsprünge des ersten Leitungsabschnitts und somit das Ziehen des ersten Leitungsabschnitts in den zweiten ermöglichen. Durch eine Rotationsbewegung der Anschlussklemme entsteht schließlich eine feste Verbindung zwischen den beiden Leitungsabschnitten.

Aus der DE 10 2014 100248 A1 ist eine Anschlussvorrichtung bekannt, die eine Befüllvorrichtung für einen Fahrzeugtank betrifft. Der Befüllkopf besitzt an seinem der Einfüllöffnung gegenüberliegenden Ende einen rohrförmigen Abschnitt, der in ein mit dem Fahrzeugtank verbundenes Befüllrohr eingesetzt wird. Zwischen den gegenüberliegenden Enden des Befüllkopfes weist dieser an seiner Außenseite einen umlaufenden Befestigungsflansch auf. Das Befüllrohr weist an seinem dem Befüllkopf zugewandten Ende ebenfalls einen Befestigungsflansch auf. Im in das Befüllrohr eingesetzten Zustand des rohrförmigen Abschnitts liegt der Befestigungsflansch des Befüllkopfes an dem Befestigungsflansch des Befüllrohrs an. Um die auf diese Weise verbundenen Rohrabschnitte können dann die beiden Ringhälften der Anschlussklemme angebracht werden, wobei die Ringhälften in der Schließstellung nach Art eines Bajonettverschlusses mit dem Befestigungsflansch des Befüllkopfes und/oder dem Befestigungsflansch des Befüllrohrs zusammenwirken.

Eine gattungsbildende Anschlussvorrichtung ist aus der eingangs genannten FR 2 895 057 A1 bekannt. An den Stirnseiten der Halbringsegmente befinden sich Stifte bzw. Löcher, die das zur Verrastung der Halbringsegmente miteinander erforderliche, lineare Aufeinander-zu-Schieben der Halbringsegmente erleichtern sollen.

### Aufgabenstellung

Es ist die Aufgabe der vorliegenden Erfindung, eine gattungsgemäße Anschlussvorrichtung derart weiterzubilden, um die Handhabung zu verbessern.

### Darlegung der Erfindung

Diese Aufgabe wird in Verbindung mit den Merkmalen des Oberbegriffs von Anspruch 1 dadurch gelöst, dass der Anschlussstutzen ein tangential oder radial erstrecktes erstes Linearführungselement und eines der Halbringsegmente an der Innenwandung oder als Teil der Wandung eines seiner Segmentenden ein korrespondierendes, zweites Linearführungselement aufweist, die bei Wechselwirkung miteinander sowohl eine axiale Bewegung als auch eine Rotation des Halbringsegments relativ zum Anschlussstutzen einschränken.

Eine alternative Lösung dieser Aufgabe sieht in Verbindung mit den Merkmalen von Anspruch 3 vor, dass beide Segmentenden des ersten Halbringsegmentes Rastmittel erster Art und beide Segmentenden des zweiten Halbringsegmentes Rastmittel zweiter Art tragen, die in tangentialer Richtung ineinander geschoben und dadurch miteinander verrastbar sind.

Bevorzugte Ausführungsformen der Erfindung sind Gegenstand der abhängigen Ansprüche.

Anstelle einer vormontierten, schwenkbaren Verbindung der Halbringsegmente ist eine beidseitige Verrastung an beiden Segmentenden jedes Halbringsegmentes vorgesehen. Dabei entstehen zwei gleichartige Rastverbindungen, bei denen jeweils Rastmittel erster und zweiter Art ineinandergreifen. Jedes der beiden Halbringsegmente der Anschlussklemme der erfindungsgemäßen Anschlussvorrichtung gemäß der Ausführungsform nach Anspruch 1 trägt beide Arten von Rastmitteln, je eine an jedem seiner beiden Segmentenden. Alternativ können die Halbringsegmente der Anschlussklemme gemäß der Ausführungsform nach Anspruch 3 an beiden Segmentenden die gleiche Art von Rastmitteln tragen. Zum Zusammenbau werden zwei - im Fall der Ausführungsform von Anspruch 1 vorzugsweise identisch aufgebaute - Halbringsegmente mit ihren einander zugewandten, konkaven Seiten einander gegenüber positioniert und linear aufeinander zu bewegt, sodass die einander jeweils zugeordneten Segmentenden relativ zueinander eine tangential gerichtete Linearbewegung durchführen. Dabei gleiten die jeweils korrespondierenden Rastmittel ineinander und verrasten. Erfolgt dieser Zusammenbau um zwei aneinander anliegende Anlageflansche herum, sodass letztere von den Klemmflanschen der Anschlussklemme umgriffen werden, resultiert nach einer Dreh- und Hubbewegung der Anschlussklemme eine dichtende Verbindung vergleichbar dem bekannten Triclamp-Standard.

Die Halbringsegmente zum Aufbau der ringförmigen Anschlussklemme, die Teil der erfindungsgemäßen Anschlussvorrichtung sind, sind versehen mit einem nach innen kragenden Klemmflansch und einem axial von diesem beabstandeten, axialen Widerlager und mit einem ersten Segmentende, welches Rastmittel erster Art trägt, und einem zweiten Segmentende, welches korrespondierende Rastmittel zweiter Art trägt, wobei die Rastmittel erster Art am ersten Segmentende durch tangentiales Ineinanderschieben mit Rastmitteln zweiter Art am zweiten Segmentende eines weiteren, vorzugsweise baugleichen Halbringsegmentes und die Rastmittel zweiter Art am zweiten Segmentende durch tangentiales Ineinanderschieben mit Rastmitteln erster Art am ersten Segmentende des weiteren Halbringsegmentes verrastbar sind.

Ein alternatives Halbringsegment zum Aufbau einer ringförmigen Anschlussklemme, die Teil der erfindungsgemäßen Anschlussvorrichtung ist, weist einen nach innen kragenden Klemmflansch, ein axial von diesem beabstandetes, axiales Widerlager, ein erstes Segmentende, welches Rastmittel erster Art trägt, und ein zweites Segmentende, welches Rastmittel erster Art trägt, auf, wobei die Rastmittel erster Art am ersten Segmentende durch tangentiales Ineinanderschieben mit Rastmitteln zweiter Art am zweiten Segmentende eines weiteren Halbringsegmentes und die Rastmittel erster Art am zweiten Segmentende durch tangentiales Ineinanderschieben mit Rastmitteln zweiter Art am ersten Segmentende des weiteren Halbringsegmentes verrastbar sind.

Das axiale Widerlager kann als Rampenabschnitt oder als Schrägschlitz ausgebildet sein.

Die Halbringsegmente können als einfache Spritzgussteile aus Kunststoff hergestellt werden. Eine weitere Vormontage ist nicht erforderlich, was die Herstellung kostengünstiger macht. Insbesondere im bevorzugten Fall, dass die Anschlussklemme aus zwei identisch aufgebauten Halbringsegmenten aufgebaut werden soll, ergibt sich eine weitere Kostensenkung.

Problematisch kann jedoch sein, dass die Anpresskraft zwischen den Leitungsabschnitten unmittelbar von der Handkraft des Monteurs, mit der dieser die Halbringsegmente aneinander drückt, abhängig ist. Diese Handkraft kann zwar durch den Einsatz von Werkzeugen vergrößert werden; dies verkompliziert und verlangsamt jedoch den Montageprozess. Dieses Problem ist nicht spezifisch für die hier beschriebene Anschlussklemme, sondern besteht auch bei herkömmlichen, klappbaren Tri-Clamps.

Die Erfindung betrifft daher eine Anschlussvorrichtung gemäß dem Oberbegriff des Anspruchs 1, nämlich eine Anschlussvorrichtung, umfassend
- einen Leitungsabschnitt mit einem endständigen, nach radial außen kragenden Anlageflansch zur Anlage eines korrespondierenden Anlageflansches eines an den Leitungsabschnitt anzukoppelnden, weiteren Leitungsabschnitts und
- eine ringförmige Anschlussklemme mit einem nach radial innen kragenden, ersten Klemmflansch und einem axial von diesem beabstandeten, axialen Widerlager, die aus einem ersten und einem zweiten Halbringsegment aufgebaut ist, welche jeweils ein erstes und ein zweites Segmentende aufweisen, wobei das erste Segmentende des ersten Halbringsegmentes Rastmittel erster Art und das zweite Segmentende des zweiten Halbringsegmentes korrespondierende Rastmittel zweiter Art trägt, die in tangentialer Richtung ineinander geschoben und dadurch miteinander verrastbar sind, wobei das zweite Segmentende des ersten Halbringsegmentes Rastmittel zweiter Art und das erste Segmentende des zweiten Halbringsegmentes Rastmittel erster Art trägt, die in tangentialer Richtung ineinander geschoben und dadurch miteinander verrastbar sind, wobei der Leitungsabschnitt als ein rohrartiger Anschlussstutzen mit axial von der Anlagefläche seines Anlageflansches beabstandeten ersten Gewindemitteln ausgebildet ist und das axiale Widerlager der Anschlussklemme als zu den ersten Gewindemitteln korrespondierende, zweite Gewindemittel ausgebildet ist.

Dabei ist der erste Leitungsabschnitt gegenüber dem Triclamp-Standard modifiziert, insbesondere ist er um erste Gewindemittel erweitert, die axial beabstandet von der Anlagefläche seines Anlageflansches angeordnet sind. Zur speziellen Ausgestaltung der Gewindemittel werden weiter unten noch verschiedene Ausführungsbeispiele genannt.

Auch die Anschlussklemme ist entsprechend modifiziert, insbesondere werden anstelle eines zweiten Klemmflansches zweite Gewindemittel eingesetzt, die mit den ersten Gewindemitteln des Anschlussstutzens zur Bildung eines Gewindes wechselwirken.

Die Anschlussklemme wird zunächst in der oben grundsätzlich beschriebenen Weise um die aneinander anliegenden Anlageflansche des Leitungsabschnitts und des weiteren Leitungsabschnittes montiert, sodass der Klemmflansch an der Rückseite des Anlageflansches des weiteren Leitungsabschnitts anliegt und die ersten und zweiten Gewindemittel zur Bildung eines Gewindes ineinander greifen. Hierbei kann optional bereits durch geeignete Anordnung von Flanschschrägen ähnlich dem erläuterten Triclamp-Prinzip eine vorläufige Anpresskraft auf die aneinander anliegenden Anlageflansche erzeugt werden. Eine anschließende Rotation der Anschlussklemme relativ zum Anschlussstutzen führt aufgrund der Wechselwirkung der ersten und zweiten Gewindemittel miteinander zu einer axialen Bewegung der geschlossenen Anschlussklemme und damit zur Erzeugung einer Axialkraft, die die auf die Anlageflansche wirkende Anpresskraft erhöht. Das hierfür notwendige, manuell aufzubringende Drehmoment kann, je nach Wahl der Gewindesteigung und des Durchmessers der Anschlussklemme, recht gering sein. Auf diese Weise kann mit geringerer Handkraft als beim herkömmlichen Triclamp-Standard eine höhere Anpresskraft und damit eine verbesserte Dichtigkeit der Verbindung erzielt werden.

Bei einer ersten bevorzugten Variante der Anschlussvorrichtung ist vorgesehen, dass die ersten Gewindemittel als über den Umfang des Anschlussstutzens verteilte Rampenabschnitte ausgebildet sind, deren Schrägen an ihren dem Anlageflansch abgewandten Seiten angeordnet sind,
und die zweiten Gewindemittel als korrespondierend über den Umfang der Anschlussklemme verteilte Rampenabschnitte ausgebildet sind, deren Schrägen an ihren dem Klemmflansch zugewandten Seiten angeordnet sind. So wird z.B. ein zweigängiges Gewinde realisiert, wobei jeder Gewindegang die Länge eines halben Umlaufs hat. Die Gewindegänge überlappen einander nicht. Die Anschlussklemme lässt sich daher maximal um 180° mit zunehmender Anzugskraft drehen. Der Vorteil dieser Ausführungsform liegt in der Maximierung der Anlagefläche zwischen ersten und zweiten Gewindemitteln, die im gespannten Zustand über einen großen Bereich aneinander anliegen. Hierdurch werden auch bei Verwendung von geringfügig verformbarem Kunststoffmaterial solche Verformungen vermieden, die ggf. zu Undichtigkeiten führen könnten.

Insbesondere bei Verwendung von im Wesentlichen unverformbaren Materialien kann eine material- und gewichtssparende, zweite Variante von Vorteil sein, bei der die ersten Gewindemittel als eine Mehrzahl von über den Umfang des Anschlussstutzens verteilten, nach radial außen vorstehenden, lokalen Haltevorsprüngen ausgebildet sind und die zweiten Gewindemittel als eine gleiche Mehrzahl von korrespondierend über den Umfang der Anschlussklemme verteilten Schrägschlitzen in den Wandungen der Halbringsegmente ausgebildet sind. Dies entspricht dem Prinzip der aus dem Elektronikbereich bekannten BNC-Anschlüsse ("Bayonet Neill Concelman'-Anschlüsse). Bei einer derartigen Ausführungsform lässt sich die Anschlussklemme maximal um 90°, bevorzugt um 45°, mit zunehmender Anzugskraft drehen.

Um nach dem Verspannen einer Verbindung zweier Leitungsabschnitte ein unbeabsichtigtes Lösen dieser Kopplung zu vermeiden, kann vorgesehen sein, dass der Anschlussstutzen nach radial außen wirkende, erste Sicherungs-Rastmittel und eines der Halbringsegmente korrespondierende, nach radial innen wirkende, zweite Sicherungs-Rastmittel aufweist, die in wechselwirkendem Zustand einer Relativrotation der Anschlussklemme zum Anschlussstutzen in Löserichtung entgegenwirken. Die ersten und zweiten Sicherungs-Rastmittel sind bevorzugt in Umfangsrichtung relativ zueinander so angeordnet, dass sie lediglich im gespannten Zustand der Anschlussvorrichtung miteinander wechselwirken.

Alternativ kann es sich bei dem Sicherungs-Rastmittel auch um eine zusätzliche Ausnehmung im Endbereich des Schrägschlitzes handeln, die einen Haltevorsprung des Leitungsabschnitts im gespannten Zustand der Anschlussvorrichtung zumindest teilweise aufnimmt und eine Bewegung des Haltevorsprungs relativ zum Schrägschlitz verhindert.

Auf diese Weise erhält der Monteur, der den Rastvorgang beispielsweise an einem entsprechenden Rastgeräusch, Rastklick oder in Form einer mechanischen Blockade wahrnimmt, eine Rückmeldung, ob er das Gewinde durch Verdrehen der Anschlussklemme in Spannrichtung bereits hinreichend angezogen hat.

Die zweiten Sicherungs-Rastmittel sind bevorzugt axial zwischen dem Klemmflansch und den zweiten Gewindemitteln angeordnet. Hieraus folgt, dass die korrespondierenden, ersten Sicherungs-Rastmittel bei dieser Ausführungsform axial zwischen der Anlagefläche des Anlageflansches und der Wechselwirkungsfläche der ersten Gewindemittel angeordnet sind. Bei der bevorzugten Ausführungsform der Erfindung sind der Anlageflansch und die ersten Gewindemittel, die beide über die Wandung des Anschlussstutzens nach radial außen vorspringen, axial voneinander beabstandet. In dieser Lücke können die ersten Sicherungs-Rastmittel Platz finden. Die korrespondierende Anschlussklemme weist eine Lücke zwischen dem gleichermaßen axial beabstandeten und nach radial innen vorspringenden Klemmflansch und zweiten Gewindemitteln auf, in welcher die zweiten Sicherungs-Rastmittel raumsparend Platz finden. Die zweiten Sicherungs-Rastmittel können auch in oder an einer Trägerstruktur der ersten Gewindemittel angeordnet sein. Es sind allerdings auch Ausführungsformen denkbar, bei denen die rückwärtige Seite des Anlageflansches zugleich die ersten Gewindemittel trägt. In diesem Fall fehlt eine zur Anordnung der ersten Sicherungs-Rastmittel geeignete Lücke zwischen Anlageflansch und ersten Gewindemitteln.

Unabhängig von der konkreten Positionierung der zweiten Sicherungs-Rastmittel ist bei einer bevorzugten Ausführungsform der Erfindung vorgesehen, dass die zweiten Sicherungs-Rastmittel als eine manuell lösbare Rastwippe ausgebildet sind. Hierdurch können die miteinander wechselwirkenden ersten und zweiten Sicherungs-Rastmittel zwar ein unbeabsichtigtes Lösen der erfindungsgemäß hergestellten Verbindung verhindern; gleichwohl ist es bei Bedarf möglich, die Verbindung bewusst zu lösen. Der Fachmann wird in Ansehung der Erfordernisse des Einzelfalls entscheiden können, ob eine lösbare oder eine unlösbare Verbindung realisiert werden soll, wobei bei einer lösbaren Verbindung die Rastwippe mit einem Betätigungsabschnitt versehen sein kann.

Der Fachmann wird im Rahmen der obigen Erläuterungen erkannt haben, dass aufgrund des erforderlichen Ineinander-Greifens der ersten und zweiten Gewindemittel ein die Anlageflansche der Leitungsabschnitte umgreifendes Schließen der Anschlussklemme nicht in allen Drehwinkellagen der Anschlussklemme relativ zum Anschlussstutzen möglich ist. Typischerweise wird dies vielmehr nur in einer Drehwinkellage möglich sein, von der ausgehend eine Rotation in Spannrichtung möglich ist. Um ein leichteres Auffinden dieser Startposition zu ermöglichen, ist erfindungsgemäß vorgesehen, dass der Anschlussstutzen ein tangential oder radial erstrecktes erstes Linearführungselement und eines der Halbringsegmente an der Innenwandung oder als Teil der Wandung eines seiner Segmentenden ein korrespondierendes, zweites Linearführungselement aufweist. Durch diese Linearführungselemente wird zum einen die Drehwinkellage markiert, in der sich die Halbringsegmente relativ zum Anschlussstutzen befinden müssen, um miteinander verrasten zu können. Zum anderen limitieren diese Linearführungselemente auch die möglichen Bewegungen der Halbringsegmente auf das zur Verrastung erforderliche lineare Aufeinander-zu-Schieben.

Die Funktionen der Linearführung und die oben diskutierte Sicherungs-Verrastung können bei einer besonders bevorzugten Ausführungsform kombiniert werden. Dabei ist vorgesehen, dass das erste Linearführungselement als ein horizontal abstehender Flügel mit einer radial abstehenden, als erste Sicherungs-Rastmittel wirkenden Rastecke ausgebildet ist und die zweiten Sicherungs-Rastmittel als ein einem nach radial innen aus der Wandung des zugeordneten Halbringsegmentes vorspringenden Rotationsanschlag benachbarter, ebenfalls nach radial innen aus der Wandung des zugeordneten Halbringsegmentes vorspringender Sicherungs-Rastbuckel ausgebildet sind. Der horizontal abstehende Flügel weist eine in seinem Ansatzpunkt tangentiale, erste Kante auf, die als erstes Linearführungselement dient. Dort, wo diese erste Kante die ca. 90° vom Ansatzpunkt entfernte Radiale schneiden würde, springt der Flügel unter Bildung der Rastecke und einer zweiten Kante wieder nach radial innen zurück. Die Rastecke bewegt sich beim Verspannen der Anschlussklemme durch Relativrotation zum Anschlussstutzen mit minimalem Abstand an dessen Innenwandung entlang bis ihre zweite Kante an dem aus der Innenwandung der Anschlussklemme vorspringenden Rotationsanschlag anschlägt. Kurz zuvor aber hat die Rastecke den Sicherungs-Rastbuckel passiert, der geringfügig höher als der Abstand zwischen Rastecke und Anschlussklemmen-Innenwandung, gleichwohl aber durch elastische Verformung der beteiligten Elemente überwindbar ist. Die Rastecke ist somit zwischen dem Rotationsanschlag und dem Sicherungs-Rastbuckel verrastet. Je nach Formgebung von Sicherungs-Rastbuckel und/oder Rastecke kann diese Verrastung lösbar oder unlösbar sein.

Es kann vorteilhaft sein, wenn das Linearführungselement des Halbringsegments an seinem vorderen Ende eine Rastklammer aufweist. Diese Rastklammer übt in der Vormontagestellung eine Klemmkraft auf das Linearführungselement des Anschlussstutzens aus und schränkt somit sowohl eine axiale Bewegung als auch eine Rotation des Halbringsegments relativ zum Anschlussstutzen ein.

Auf diese Weise erhält der Monteur, der den Rastvorgang beispielsweise an einem entsprechenden Rastgeräusch, Rastklick oder in Form einer mechanischen Blockade wahrnimmt, eine Rückmeldung, ob er das Halbringsegment hinreichend an dem Anschlussstutzen angeordnet hat.

Beim Verbringen der Halbringsegmente in eine Endmontagestellung werden die Linearführungselemente des Anschlussstutzens aus der Rastklammer heraus bewegt, eine gleitende Bewegung entlang der Innenseiten der Linearführungselemente des Halbringsegments erfolgt.

Auf diese Weise erhält der Monteur, der den Rastvorgang beispielsweise an einem entsprechenden Rastgeräusch, Rastklick oder in Form einer mechanischen Blockade wahrnimmt, eine Rückmeldung, ob er die Halbringsegmente hinreichend zusammengeführt hat.

Es kann vorteilhaft sein, wenn auf der Innenseite der Halbringsegmente zwischen den Segmentenden eines Halbringsegments ein elastisches Rückstellelement angeordnet ist. Dieses Rückstellelement ist derart eingerichtet, dass das Rückstellelement eine Rückstellkraft auf das Halbringsegment ausübt, welche der Kraft, die benötigt wird, um die Halbringsegmente von einer Vormontagestellung in eine Endmontagestellung zu verbringen, entgegenwirkt. Somit ist es durch Lösen der Rastmittel vereinfacht möglich, die Halbringsegmente von einer Endmontagestellung in eine Vormontagestellung zu verbringen.

Vorzugsweise sind die elastischen Rückstellelemente parallel zu den sich tangential erstreckenden Rastmitteln angeordnet.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: eine perspektivische Darstellung des Anschlussstutzens einer erfindungsgemäßen Anschlussvorrichtung in einer ersten Ausführungsform,
- Figur 2:: eine perspektivische Darstellung eines erfindungsgemäßen Halbringsegments zum Aufbau einer erfindungsgemäßen Anschlussklemme in besagter erster Ausführungsform,
- Figur 3:: eine perspektivische Darstellung des Anschlussstutzens von Figur 1 und zweier Halbringsegmente von Figur 2 in Vorbereitungsstellung,
- Figur 4:: eine perspektivische Darstellung der Elemente von Figur 3 in vormontierter Stellung,
- Figur 5:: eine Querschnittdarstellung durch die Anordnung von Figur 4,
- Figur 6:: eine perspektivische Darstellung des Anschlussstutzens von Figur 1 und zweier Halbringsegmente von Figur 2 in verrasteter, unverdrehter Stellung,
- Figur 7:: eine Längsschnittdarstellung durch die Anordnung von Figur 6,
- Figur 8:: eine Querschnittdarstellung durch die Anordnung von Figur 6,
- Figur 9:: eine perspektivische Darstellung des Anschlussstutzens von Figur 1 und zweier Halbringsegmente von Figur 2 in verdrehter Endstellung,
- Figur 10:: eine Längsschnittdarstellung durch die Anordnung von Figur 9,
- Figur 11:: eine Querschnittdarstellung durch die Anordnung von Figur 9,
- Figur 12:: eine perspektivische Darstellung des Anschlussstutzens einer erfindungsgemäßen Anschlussvorrichtung in einer dritten Ausführungsform,
- Figur 13:: eine perspektivische Darstellung eines erfindungsgemäßen Halbringsegments zum Aufbau einer erfindungsgemäßen Anschlussklemme in besagter dritter Ausführungsform,
- Figur 14:: eine perspektivische Darstellung des Anschlussstutzens einer erfindungsgemäßen Anschlussvorrichtung in einer vierten Ausführungsform,
- Figur 15:: eine perspektivische Darstellung eines erfindungsgemäßen Halbringsegments zum Aufbau einer erfindungsgemäßen Anschlussklemme in besagter vierter Ausführungsform,
- Figur 16:: eine perspektivische Darstellung des Anschlussstutzens einer erfindungsgemäßen Anschlussvorrichtung in einer fünften Ausführungsform,
- Figur 17:: zwei perspektivische Darstellungen eines erfindungsgemäßen Halbringsegments zum Aufbau einer erfindungsgemäßen Anschlussklemme in besagter fünfter Ausführungsform,
- Figur 18:: eine perspektivische Darstellung des Anschlussstutzens von Figur 18 und zweier Halbringsegmente von Figur 19 in Vorbereitungsstellung,
- Figur 19:: eine perspektivische Darstellung der Elemente von Figur 20 in vormontierter Stellung (Fig. 21 a)) sowie zwei Detaildarstellungen (Fig. 21 b), 21c)),
- Figur 20:: eine Seitenansicht der Anordnung von Figur 21,
- Figur 21:: eine Querschnittdarstellung durch die Anordnung von Figur 21,
- Figur 22:: eine perspektivische Darstellung des Anschlussstutzens von Figur 18 und zweier Halbringsegmente von Figur 19 in verrasteter, unverdrehter Stellung,
- Figur 23:: eine Seitenansicht des Anschlussstutzens von Figur 18 und zweier Halbringsegmente von Figur 19 in verrasteter, unverdrehter Stellung,
- Figur 24:: eine Querschnittdarstellung durch die Anordnung von Figur 24 und
- Figur 25:: eine perspektivische Darstellung des Anschlussstutzens von Figur 18 und zweier Halbringsegmente von Figur 19 in verdrehter Endstellung.

### Ausführliche Beschreibung bevorzugter Ausführungsformen

Gleiche und ggf. gestrichelte Bezugszeichen in den Figuren weisen auf gleiche oder analoge Elemente hin.

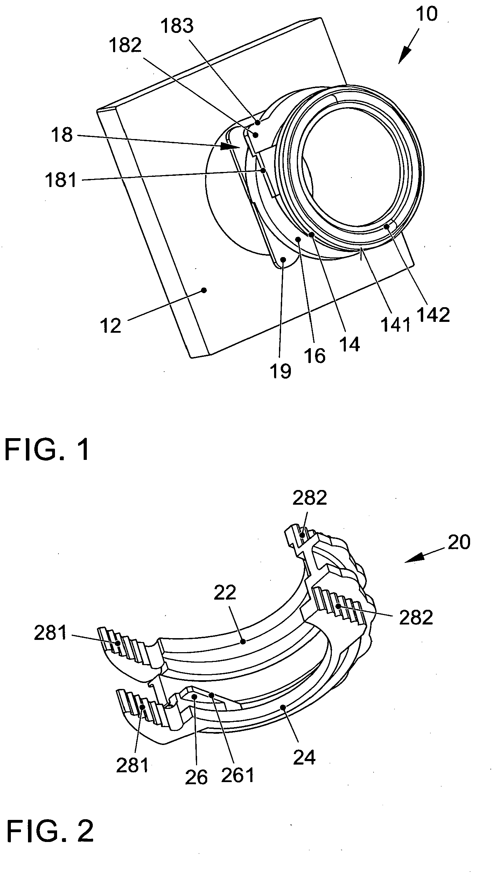

Figur 1 zeigt einen Leitungsabschnitt 10, z.B. einen Anschlussstutzen, in einer bevorzugten Ausführungsform der vorliegenden Erfindung. Der Anschlussstutzen 10 ist fest an der Wandung 12 eines im Übrigen nicht dargestellten Behälters, beispielsweise eines Bioreaktors oder einer Filtercapsule, befestigt. Vorzugsweise ist der Anschlussstutzen 10 einstückig mit der Behälter- oder Capsulenwandung 12 ausgebildet. Der Anschlussstutzen 10 weist an seinem freien Ende einen nach radial außen kragenden Anlageflansch 14 auf. Dieser Anlageflansch 14 dient zur Anlage eines korrespondierenden Anlageflansches eines nicht dargestellten, weiteren Leitungsabschnitts, beispielsweise eines Schlauches oder eines Rohres, der fluiddicht an den Behälter oder die Capsule angeschlossen werden soll. Bei der gezeigten Ausführungsform weist die Anlagefläche 141 des Anlageflansches 14 eine elastische Dichtung 142 auf.

Mit axialem Abstand von dem Anlageflansch 14 wird der Anschlussstutzen 10 von einem ersten Gewindemittel, z.B. von einem Rampenring 16, umlaufen. Der Rampenring 16 besteht aus zwei Rampenabschnitten, die um 180° versetzt den Umfang des Anschlussstutzens 10 jeweils etwa halb umlaufen. Die Schrägen der Rampenabschnitte sind an der dem Anlageflansch 14 abgewandten Seite des Rampenrings 16 gelegen, d.h. unten in Figur 1. Dies ist in Figur 1 insbesondere in deren Zentrum gut zu erkennen, wo links eine Kante zwischen den beiden Rampenabschnitten sichtbar ist.

Oberhalb besagter Kante ist in Figur 1 ein erstes Sicherungs-Rastmittel in Form eines horizontal abstehenden Flügels 18 erkennbar. Der Flügel 18 weist in Figur 1 links ein Linearführungselement, z.B. eine sich tangential erstreckende Linearführungskante 181, auf, die in eine Rastecke 182 übergeht, bevor eine rückwärtige Anschlagkante 183 des Flügels 18 wieder nach radial innen rückspringt. Die Bedeutung der Linearführungskante 181 und der Rastecke 182 und der Anschlagkante 183 soll weiter unten noch näher beschrieben werden.

Unterhalb des Rampenrings 16 sind Stützflügel 19 angeordnet, auf die weiter unten noch näher eingegangen werden soll.

Figur 2 zeigt eine perspektivische Darstellung einer bevorzugten Ausführungsform eines Halbringsegments 20, welches zum Aufbau einer Anschlussklemme nutzbar ist, die ihrerseits zum Einsatz mit einem Anschlussstutzen 10 gemäß Figur 1 geeignet ist.

Das Halbringsegment 20 überspannt einen Bogen von ca. 180°. An seinem in Figur 2 oberen Rand weist es einen nach radial innen kragenden Klemmflansch 22 auf. Hiervon axial beabstandet, d.h. am gegenüberliegenden Rand des Halbringsegmentes 20, erstreckt sich ein Rampenabschnitt 24 als Bestandteil eines axialen Widerlagers, dessen dem Klemmflansch 22 zugewandte Seite die Rampenschräge aufweist. Die Rampenschräge des Rampenabschnitts 24 des Halbringsegmentes 20 korrespondiert zu der Rampenschräge der Rampenabschnitte des Rampenrings 16 des Anschlussstutzens 10.

In der axialen Lücke zwischen dem Klemmflansch 22 und dem Rampenabschnitt 24 ist ein Führungsflügel 26 erkennbar, dessen Linearführungselement, z.B. eine Linearführungskante 261, tangential (in Bezug auf das zugeordnete Segmentende) erstreckt ist. Die Linearführungskante 261 dient der Wechselwirkung mit der Linearführungskante 181 des Flügels 18 am Anschlussstutzen 10, wie weiter unten noch näher erläutert werden soll.

An beiden Segmentenden des Halbringsegmentes 20 sind tangential erstreckte Rastmittel ausgebildet. An dem in Figur 2 linken Segmentende haben sie die Form tangential vorspringender Laschen mit einer nach radial innen gerichteten Rastzahnung. Sie sollen nachfolgend als Rastmittel erster Art, die besonders bevorzugt als Rastlaschen 281 ausgebildet sind, angesprochen werden. An dem in Figur 2 rechten Segmentende sind die Rastmittel zweiter Art in Form von Rastsockeln 282 ausgebildet, die eine nach radial außen gerichtete Rastzahnung aufweisen. Rastlaschen 281 und Rastsockel 282 sind, wie weiter unten noch näher erläutert werden soll, korrespondierend zueinander geformt.

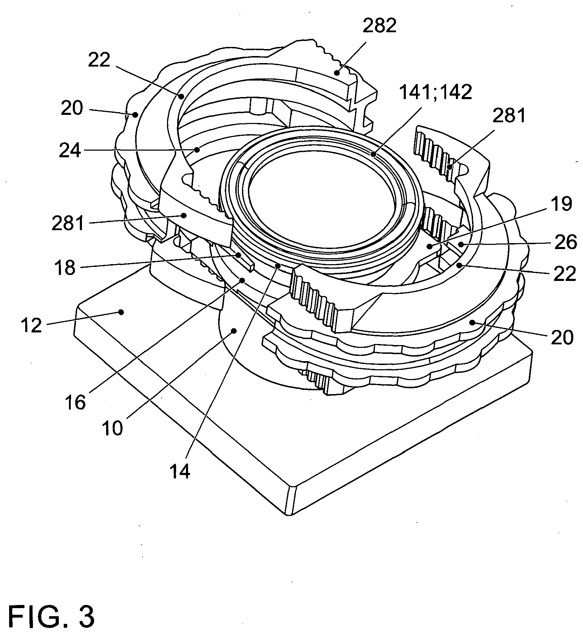

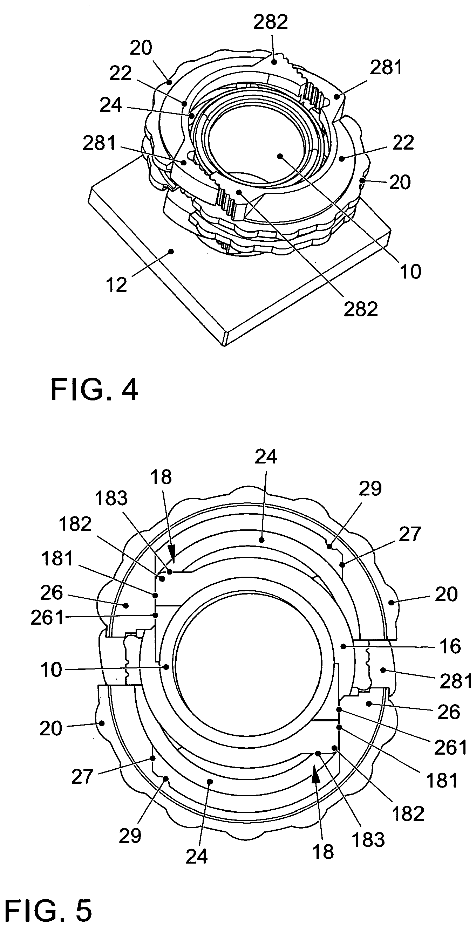

Figur 3 zeigt den Anschlussstutzen 10 von Figur 1 und zwei Halbringsegmente 20 gemäß Figur 2 in einer explosionszeichnungsartigen Darstellung, die eine hier als Vorbereitungsstellung bezeichnete Konstellation zeigt. Die Halbringsegmente 20 sind in dieser Vorbereitungsstellung beabstandet voneinander, nehmen jedoch zum Anschlussstutzen 10 bereits eine Relativorientierung ein, die ihre Überführung in die in den Figuren 4 und 5 gezeigte Vormontagestellung erlaubt.

Diese Relativorientierung lässt sich besonders deutlich anhand von Figur 5 erläutern. Erkennbar ist, dass die Linearführungskanten 261 der Halbringsegmente 20 an den Linearführungskanten 181 der Flügel 18 des Anschlussstutzens 10 anliegen. Dadurch wird eine Drehlage jedes Halbringsegmentes 20 zum Anschlussstutzen 10 vorgegeben. Zudem werden die beiden Halbringsegmente 20 in eine exakte Gegenüberstellung gezwungen, in der ihre konkaven Seiten einander gegenüberliegen. Eine axiale Bewegbarkeit wird durch den Hintergriff des Rampenabschnitts 24 der Halbringsegmente 20 unter den Rampenring 16 des Anschlussstutzens 10 eingeschränkt, wie in Figur 4 erkennbar. Zudem sorgen der Flügel 18 und die Stützflügel 19, die als Stützvorsprünge ausgebildet sein können, für eine weitere Einschränkung der axialen Bewegbarkeit.

Wie in Figur 4 erkennbar, überlappen die Rastlaschen 281 die Rastsockel 282 in der Vormontagestellung teilweise, sodass die Rastverzahnungen ineinander greifen und einer Trennung durch Auseinanderziehen der Halbringsegmente 20 entgegen wirken, wobei jedoch die lichte Weite der resultierenden Anschlussklemme noch groß genug ist, dass der erste Leitungsabschnitt axial mit dem zweiten Leitungsabschnitt zusammengefügt werden kann.

In der Vormontagestellung sind die Halbringsegmente 20 somit in einer Stellung am Anschlussstutzen 10 fixiert, die allein ein weiteres Aufeinander-zu-Schieben der Halbringsegmente 20 erlaubt. In dieser Vormontagestellung können Behälter oder Filtercapsulen mit dem erfindungsgemäßen Anschlussstutzen 10 ausgeliefert werden. Der Anschluss eines weiteren Leitungsabschnitts kann dann vom Endbenutzer vorgenommen werden, wie nachfolgend detailliert beschrieben werden soll.

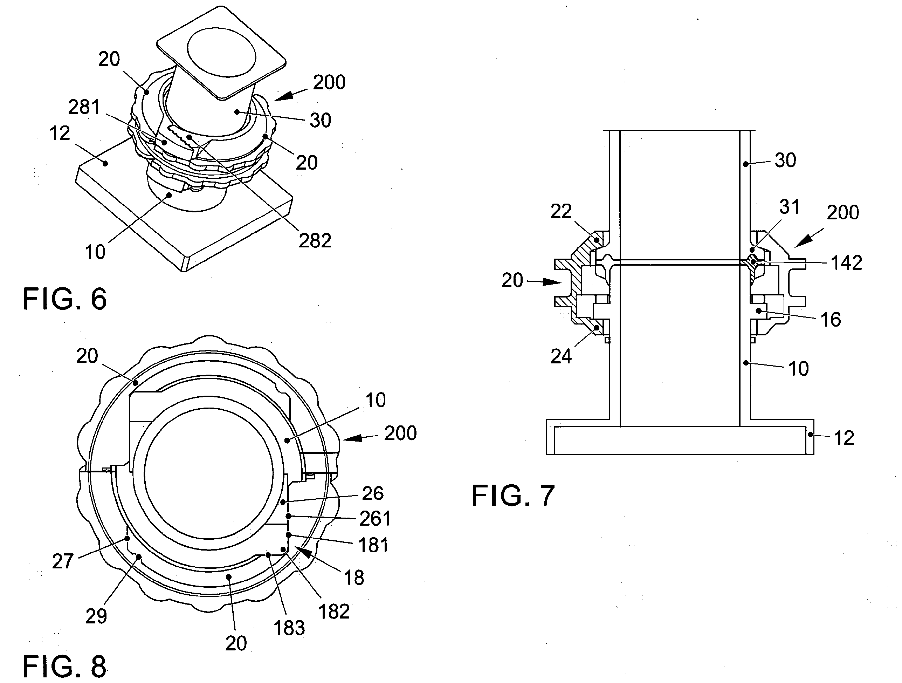

So setzt der Endbenutzer einen insbesondere nach herkömmlichem Triclamp-Standard geformten, weiteren Leitungsabschnitt 30 mit seinem Anlageflansch 31 auf den Anlageflansch 14 des Anschlussstutzens 10 auf. Im Anschluss werden die beiden Halbringsegmente 20 weiter aufeinander zu verschoben, wobei ihre Rastmittel 281, 282 tiefer ineinander gleiten und verrasten. Die beiden Halbringsegmente 20 bilden in dieser Stellung eine geschlossene, ringförmige Anschlussklemme 200. Die Klemmflansche 22 ihrer Halbringsegmente 20 hintergreifen dabei die rückwärtige Schulter des Anlageflansches 31 des weiteren Leitungsabschnitts 30. Ihre Rampenabschnitte 24 hintergreifen den Rampenring 16 des Anschlussstutzens 10, wobei die jeweiligen Rampenschrägen aneinander zu liegen kommen. Durch die insbesondere in Figur 7 erkennbare, konische Ausgestaltung der rückwärtigen Schulter des Anlageflansches 31 des weiteren Leitungsabschnitts 30 und die korrespondierend konische Ausgestaltung des Klemmflansches 22 der Halbringsegmente 20 kann bei der gezeigten Ausführungsform bereits in dieser Position eine axiale Anpresskraft der beiden Anlageflansche 31, 14 aneinander realisiert werden.

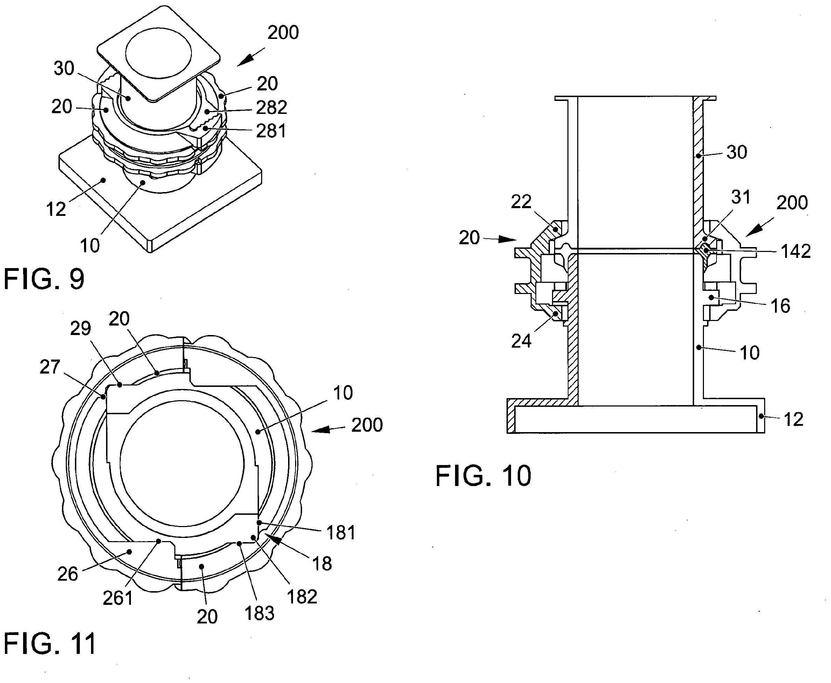

Zum Aufbringen dieser Anpresskraft kann die Anordnung der Figuren 6 bis 8 durch Rotation der Anschlussklemme 200 um 90° gegen den Uhrzeigersinn in die in den Figuren 9 bis 11 dargestellte Endstellung überführt werden. Die Drehrichtung gegen den Uhrzeigersinn zum Erreichen der Endstellung ist nicht zwingend, vielmehr ist in Abhängigkeit der Steigungsrichtung auch eine Drehrichtung im Uhrzeigersinn möglich. Bei dieser Rotation wirken die Rampenschrägen der Rampenabschnitte 24 der Anschlussklemme 200 und des Rampenrings 16 des Anschlussstutzens 10 gewindeartig miteinander, sodass die Anschlussklemme 200 in axialer Richtung auf den Anschlussstutzen 10 zu gezogen wird. Dabei presst der Klemmflansch 22 auf die rückwärtige Schulter des Anlageflansches 31 des weiteren Leitungsabschnitts 30 und zieht diesen zum Anlageflansch 14 des Anschlussstutzens 10. Hierdurch ergibt sich eine dichtende Anpressung der beiden Anlageflansche 14, 31.

Bei der dargestellten Ausführungsform weisen die Halbringsegmente 20 noch zwei zusätzliche, bislang nicht diskutierte Merkmale auf, durch welche der Benutzer einerseits eine Rückmeldung erhält, dass die in den Figuren 9 bis 11 gezeigte Endstellung erreicht ist und durch die andererseits ein versehentliches Lösen, d.h. eine Rücküberführung in die unverdrehte Stellung der Figuren 6 bis 8 verhindert wird. Im axialen Zwischenraum zwischen dem Klemmflansch 22 und den Rampenabschnitten 24 der Halbringsegmente 20 ist die lichte Weite der Anschlussklemme 200 überwiegend so groß gestaltet, dass die Rastecke 182 des Flügels 18 des Anschlussstutzens 10 die Innenwandung der Anschlussklemme 200 nicht kontaktiert. Außer im Bereich des Führungsflügels 26 ist jedoch noch ein weiterer Vorsprung der Segment-Innenwandung vorgesehen, der einen Endanschlag 27 bildet, an welchem die Anschlagkante 183 des Flügels 18 des Anschlussstutzens 10 in der Endstellung anschlägt. Erreichen dieses Anschlags signalisiert dem Benutzer die erfolgreiche Überführung in die Endstellung.

Kurz zuvor hat bei der gezeigten Ausführungsform jedoch die Rastecke 182 einen dem Endanschlag 27 vorgelagerten Sicherungs-Rastbuckel 29 zu überwinden, der ebenfalls eine Verengung der lichten Weite der Anschlussklemme 200 darstellt, die aber aufgrund von Material- und/oder Formelastizität der beteiligten Elemente überwindbar ist. Je nach spezieller Formgebung ist der Sicherungs-Rastbuckel 29 unidirektional oder bidirektional überwindbar. Je nachdem handelt es sich um einen lösbaren oder unlösbaren Anschluss des weiteren Leitungsabschnitts 30 an den Anschlussstutzen 10.

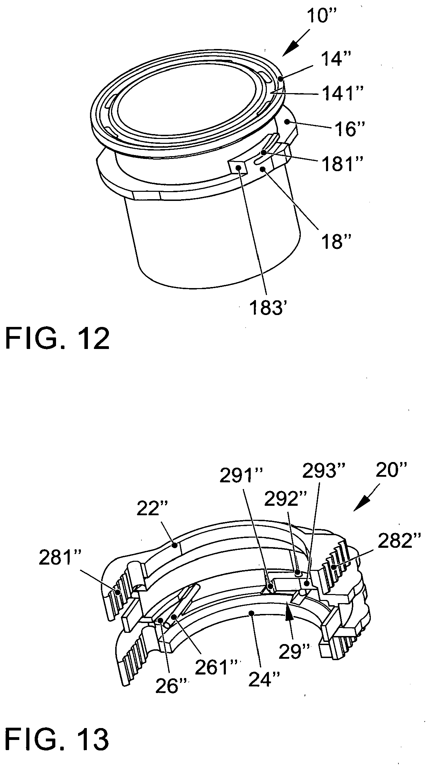

In den Figuren 12 und 13 sind ein Anschlussstutzen 10" und ein Halbringsegment 20" gemäß einer dritten Ausführungsform dargestellt. Der Führungsflügel 26" des Halbringsegmentes 20' weist ein Linearführungselement, z.B. eine rundbolzenartige Linearführungskante 261", auf. Entsprechend ist der korrespondierende Flügel 18" des Anschlussstutzens 10" anstelle einer einfachen Linearführungskante 181 mit einem Rastschlitz 181" ausgestattet, sodass eine sicherere Halterung in der Vormontagestellung gewährleistet ist.

Weiter ist anstelle des Sicherungs-Rastbuckels 29 des Halbringsegmentes 20 der ersten Ausführungsform bei der dritten Ausführungsform eine Rastwippe 29" vorgesehen, deren Rasthaken 291" in der Endlage in eine korrespondierende Rastausnehmung des Anschlussstutzens 10" einrastet. Aufgrund der wippenartigen Ausgestaltung dieser Art der Sicherungs-Rastmittel lässt sich die Verrastung durch manuellen Druck auf den andererseits der Wippachse 292" angeordneten Lösehebel 293" bei Bedarf manuell lösen.

Im Übrigen kann im Wesentlichen auf das zuvor gesagte verwiesen werden, wobei analoge Elemente mit zweigestrichenen, jedoch im Übrigen gleichen Bezugszeichen wie in den Figuren 1 bis 11 versehen sind.

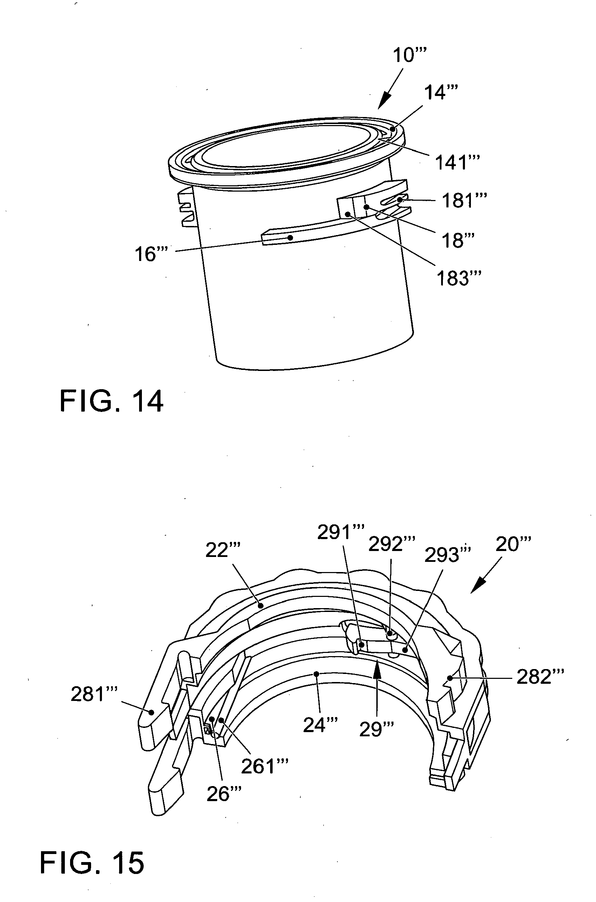

Die Figuren 14 und 15 zeigen einen Anschlussstutzen 10"' und ein Halbringsegment 20"' in einer vierten Ausführungsform, die sich von der Ausführungsform der Figuren 12 und 13 im Wesentlichen durch die Ausgestaltung der Rastlaschen 281'" und der Rastsockel 282'" unterscheidet. Während die entsprechenden Elemente bei den zuvor erläuterten Ausführungsformen jeweils eine kleinteilige Verzahnung aufwiesen, ist die Verzahnung der Rastmittel 281"', 282'" der vierten Ausführungsform auf zwei Zähne reduziert, was einer exakten Definition der Vormontagestellung und der verrasteten Stellung entspricht. Eine versehentliche, unzureichende Annäherung der beiden Halbringsegmente 20'" bei der Bildung einer Anschlussklemme ist in dieser Ausführungsform nicht möglich.

Im Übrigen kann im Wesentlichen auf das zuvor Gesagte verwiesen werden, wobei analoge Elemente mit dreigestrichenen, jedoch im Übrigen gleichen Bezugszeichen wie in den Figuren 1 bis 11 versehen sind.

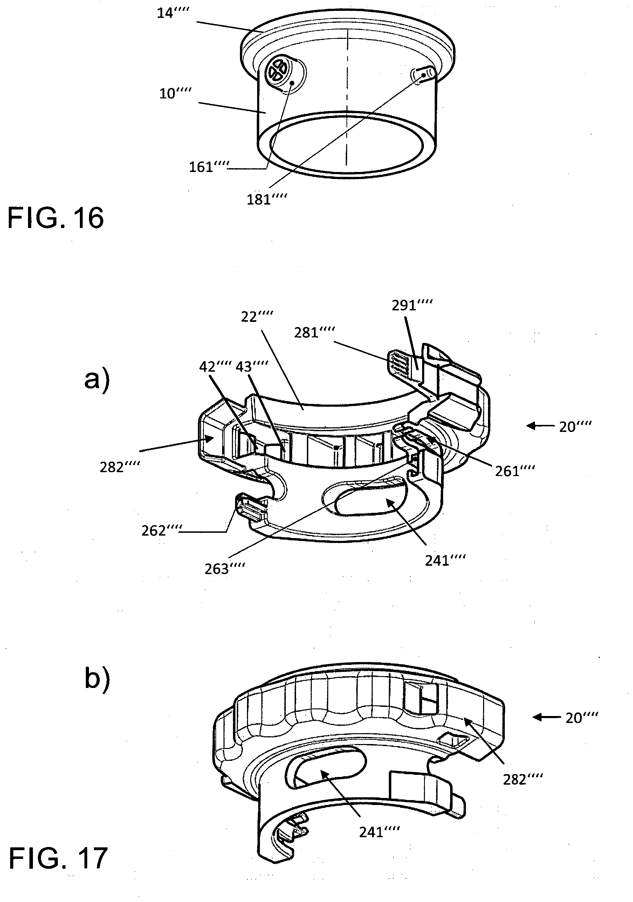

Die Figuren 16 bis 25 zeigen einen Anschlussstutzen 10"" und ein dazugehöriges Halbringsegment 20"" gemäß einer fünften Ausführungsform der Erfindung.

Figur 16 zeigt einen Anschlussstutzen 10"" der auf seiner Außenseite erste Gewindemittel 161"" aufweist. Das erste Gewindemittel 161"" umfasst zwei radial nach außen vorstehende, lokale Haltevorsprünge, welche diametral an der Außenseite des Anschlussstutzens 10"" angeordnet sind. Neben den ersten Gewindemitteln 161"" sind zwei Linearführungselemente 181"" an der Außenseite des Anschlussstutzens 10"" angeordnet, welche ebenfalls als radial nach außen vorstehende, lokale Haltevorsprünge ausgebildet sind und sich zumindest weitestgehend in einer Ebene mit den ersten Gewindemitteln 161"" befinden. Die ersten Gewindemittel 161"" schließen mit den Linearführungselemente 181"" einen Winkel von ungefähr 90° ein.

Figur 17 zeigt ein erfindungsgemäßes Halbringsegment 20"" in einer perspektivischen Vorderansicht (Fig. 17 a)) und einer perspektivischen Rückansicht (Fig. 17 b)), welches zum Einsatz mit einem Anschlussstutzen 10"" gemäß Figur 16 geeignet ist.

Die Wandung des Halbringsegments 20"" weist eine Durchtrittsöffnung in Form eines Schrägschlitzes 241"" auf. Dieser Schrägschlitz 241"" bildet ein zweites Gewindemittel und ist dazu eingerichtet mit dem ersten Gewindemittel zusammenzuwirken. Der axiale Durchmesser der Schrägschlitzes 241"" entspricht weitestgehend dem Durchmesser des ersten Gewindemittels 161"".

An beiden Segmentenden des Halbringsegmentes 20"" sind tangential erstreckte Rastmittel 281"", 282"" ausgebildet. An dem in Figur 17 a) rechten Segmentende bzw. in Fig. 17 b) linken Segmentende haben sie die Form von Rastlaschen mit einem radial nach außen weisenden Rasthaken 291"". Diese Rastmittel fallen unter die Rastmittel erster Art. An dem in Figur 17 a) linken Segmentende bzw. in Fig. 17 b) rechten Segmentende sind die Rastmittel zweiter Art in Form von Durchtrittsöffnungen ausgebildet, in welche die Rastmittel 281"" erster Art eingreifen können, und die wenigstens eine Rastmulde 42"", 43"" aufweisen, in welcher der Rasthaken 291"" des ersten Rastmittels eingreifen kann.

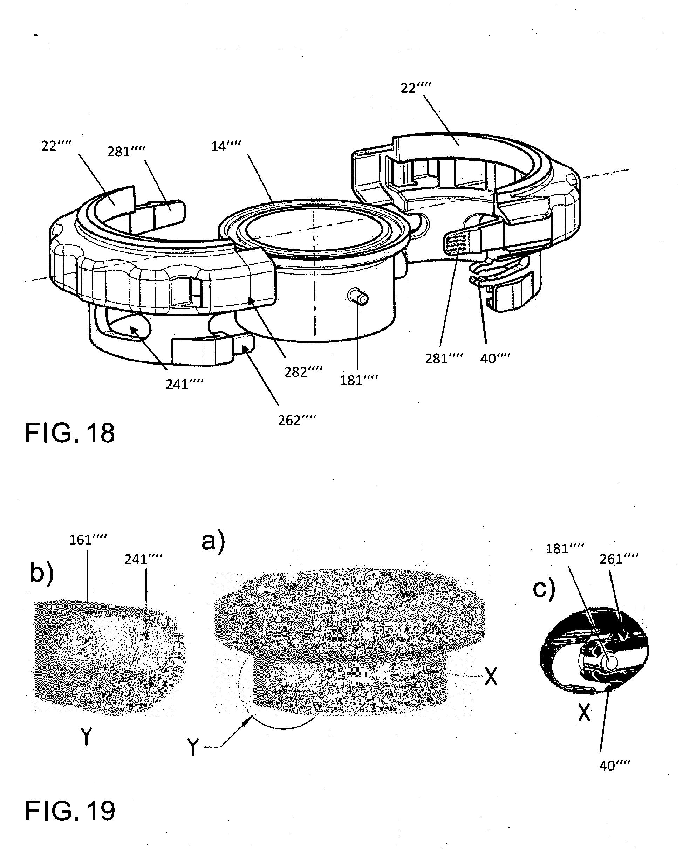

Figur 18 zeigt eine perspektivische Darstellung des Anschlussstutzens von Figur 16 und zweier Halbringsegmente von Figur 17 in Vorbereitungsstellung.

Die Figuren 19 bis 21 zeigen die erfindungsgemäßen Elemente in einer vormontierten Stellung. In dieser liegen die Linearführungselemente 181"" des Anschlussstutzens 10"" zumindest teilweise an den Innenseiten der Linearführungselemente 261"" des Halbringsegments 20"" an. Dadurch wird eine Drehlage jedes Halbringsegments 20"" zum Anschlussstutzen 10"" vorgegeben.

Zudem weist das Linearführungselement 261"" des Halbringsegments 20"" an seinem vorderen Ende eine Rastklammer 40"" auf, welche in der Vormontagestellung eine Klemmkraft auf das Linearführungselement 181"" ausübt und somit sowohl eine axiale Bewegung als auch eine Rotation des Halbringsegments 20"" relativ zum Anschlussstutzen 10"" einschränkt.

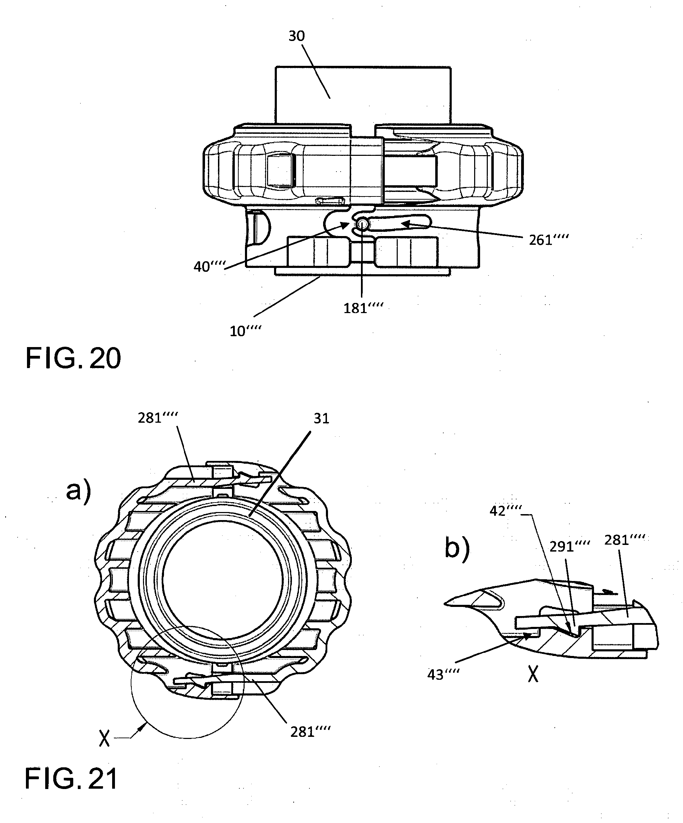

Wie gut in Figur 21 erkennbar, greift in der vormontierten Stellung der Rasthaken 291"" des ersten Rastmittels in eine Rastmulde 42"" für eine vormontierte Stellung ein. Diese formschlüssige Verbindung zwischen Rasthaken 291"" und Rastmulde 42"" wirkt einer Trennung durch Auseinanderziehen der Halbringsegmente 20"" entgegen, wobei jedoch die lichte Weite der resultierenden Anschlussklemme noch groß genug ist, dass der erste Leitungsabschnitt axial mit dem zweiten Leitungsabschnitt zusammengefügt werden kann.

Auf diese Weise erhält der Monteur, der den Rastvorgang beispielsweise an einem entsprechenden Rastgeräusch, Rastklick oder in Form einer mechanischen Blockade wahrnimmt, eine Rückmeldung, ob er das Halbringsegment 20"" hinreichend an dem Anschlussstutzen 10"" angeordnet hat.

So setzt der Endbenutzer einen insbesondere nach herkömmlichem Triclamp-Standard geformten, weiteren Leitungsabschnitt 30 mit seinem Anlageflansch 31 auf den Anlageflansch 14"" des Anschlussstutzens 10"" auf. Im Anschluss werden die beiden Halbringsegmente 20"" weiter aufeinander zu verschoben, wobei ihre Rastmittel 281"", 282"" tiefer ineinander gleiten, bis die beiden Halbringsegmente 20"" in dieser Stellung eine geschlossene, ringförmige Anschlussklemme 200 bilden.

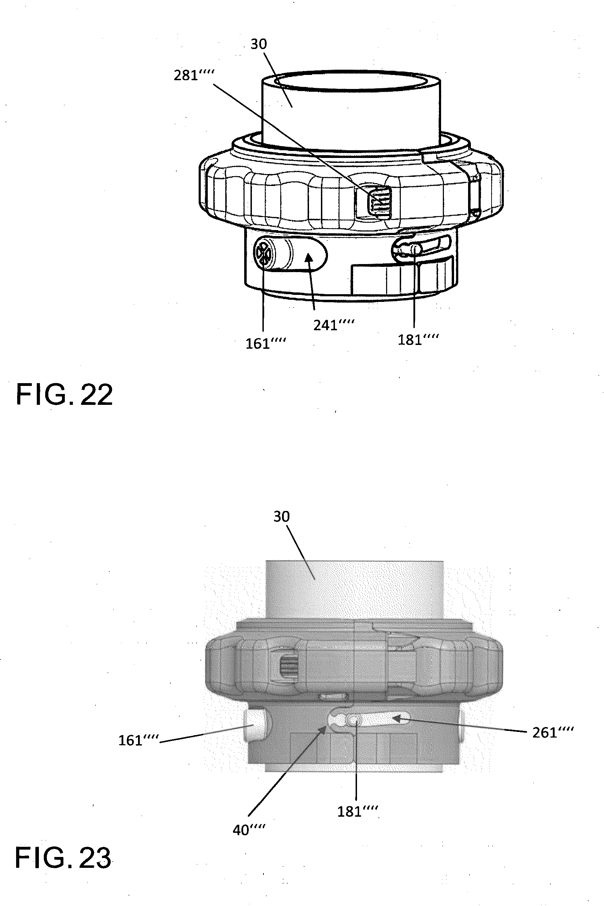

Die Figuren 22 bis 24 zeigen die erfindungsgemäßen Elemente in einer verrasteten, unverdrehten Endmontagestellung. Aufgrund des weiteren Verschiebens der Halbringsegmente 20"" werden die Rasthaken 291"" aus der Rastmulde 42"" herausbewegt und greifen in der Endmontagestellung in eine Rastmulde 43"" ein. Zudem wird das Linearführungselement 181"" des Anschlussstutzens aus der Rastklammer 40"" herausbewegt und gleitet entlang der Innenseiten der Linearführungselemente 261"" des Halbringsegments 20"".

Auf diese Weise erhält der Monteur, der den Rastvorgang beispielsweise an einem entsprechenden Rastgeräusch, Rastklick oder in Form einer mechanischen Blockade wahrnimmt, eine Rückmeldung, ob er die Halbringsegmente 20"" hinreichend zusammengeführt hat.

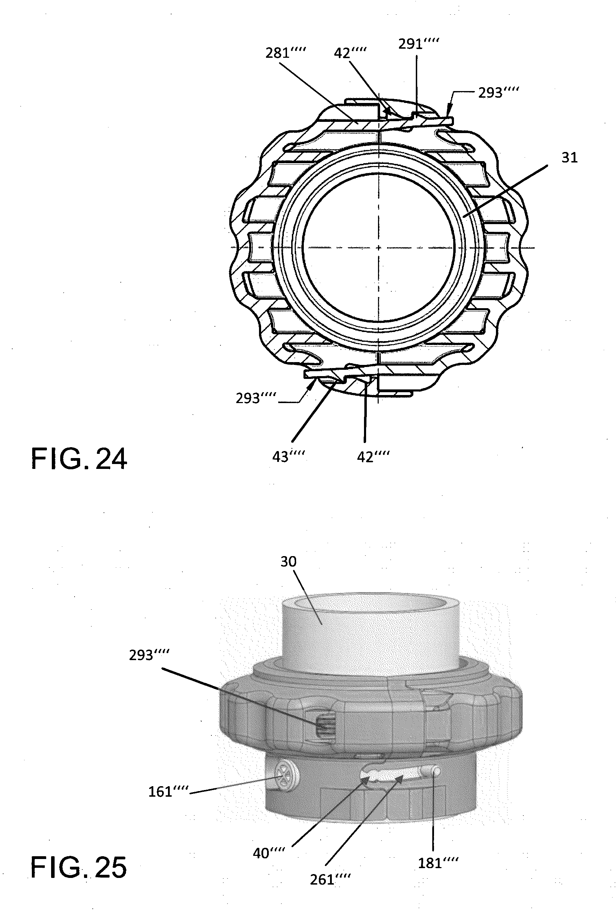

Figur 25 zeigt die erfindungsgemäßen Elemente in einer verdrehten Endstellung. Durch eine Drehbewegung werden die erfindungsgemäßen Elemente in eine verdrehte Endstellung verbracht. Dabei gleiten die Linearführungselemente 181"" des Anschlussstutzens sowie die ersten Gewindemittel 161"" in dem Linearführungselement 261"" des Halbringsegments 20"" bzw. in den zweiten Gewindemitteln 241"" bis die Linearführungselemente 181"" des Anschlussstutzens und/oder die ersten Gewindemittel 161"" an einen Anschlag anstoßen. Üblicherweise erfolgt eine Rotation um 45°.

Bei dieser Rotation wirken die Innenseiten der Linearführungselement 261"" des Halbringsegments 20"" sowie die Innenseiten des zweiten Gewindemittels 241"" gewindeartig mit dem Linearführungselement 181""des Anschlussstutzens bzw. dem ersten Gewindemittel 161"" miteinander, sodass die Anschlussklemme 200 in axialer Richtung auf den Anschlussstutzen 10"" zugezogen wird. Dabei presst der Klemmflansch 22"" auf die rückwärtige Schulter des Anlageflansches 31 des weiteren Leitungsabschnitts 30 und zieht diesen zum Anlageflansch 14"" des Anschlussstutzens 10"". Hierdurch ergibt sich eine dichtende Anpressung der beiden Anlageflansche 14"", 31.

Die Halbringsegmente 20"" können in der vorliegenden Ausführungsform von der Endmontagestellung in die vormontierte Stellung zurück überführt werden, indem auf die Lösehebel 293"" der Rastmittel 281"" erster Art eine Kraft aufgebracht und somit die Rasthaken 291"" aus den Rastmulden 43"" bewegt werden, wodurch ein Verschieben der Halbringsegmente 20"" in tangentialer Richtung voneinander weg ermöglicht wird.

Im Übrigen kann im Wesentlichen auf das zuvor Gesagte verwiesen werden, wobei analoge Elemente mit viergestrichenen, jedoch im Übrigen gleichen Bezugszeichen wie in den Figuren 1 bis 11 versehen sind.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Der Fachmann wird verstehen, dass die Anlehnung an den hier mehrfach zitierten Triclamp-Standard für die Erfindung keineswegs zwingend erforderlich ist. Wegen der weiten Verbreitung dieses Standards wird eine entsprechende Ausgestaltung jedoch als besonders vorteilhaft angesehen. Anpassungen an bestimmte Varianten des Standards (z.B. Sanitary F, Sanitary S) sind dabei ebenso möglich wie Anpassungen an andere Standards.

### Bezugszeichenliste

- 10, 10", 10"', 10"": Anschlussstutzen / Leitungsabschnitt
- 12: Behälter-/Capsulenwandung
- 14, 14", 14"', 14"":
- 141, 141", 141'", 141"": Anlagefläche
- 142: Dichtung
- 16, 16", 16'": Rampenring
- 161"": Haltevorsprung
- 18, 18", 18"': Flügel
- 181, 181"": Linearführungselement (an Anschlussstutzen)
- 181", 181'": Rastschlitz
- 182, 182", 182'": Rastecke
- 183, 183": Anschlagkante
- 19: Stützflügel
- 20, 20", 20'", 20"": Halbringsegment
- 22, 22", 22'", 22"": Klemmflansch
- 24, 24", 24"': Rampenabschnitt
- 241"": Schrägschlitz
- 26, 26", 26'": Führungsflügel
- 261, 261", 261"', 261"": Linearführungselement (an Halbringsegment)
- 262"": Linearführungselement (männlich)
- 263"": Linearführungselement (weiblich)
- 27: Endanschlag
- 281, 281", 281"', 281"": Rastmittel erster Art
- 282, 282", 282"', 282"": Rastmittel zweiter Art
- 29: Sicherungs-Rastbuckel
- 29", 29'": Rastwippe
- 291", 291'", 291"": Rasthaken
- 292", 292"': Wippachse
- 293", 293"', 293"": Lösehebel
- 200: Anschlussklemme
- 30: weiterer Leitungsabschnitt
- 31: Anlageflansch von 30
- 40"": Rastklammer
- 42"": Rastmulde für vormontierte Stellung
- 43"": Rastmulde für Endstellung

## Patentansprüche

1. Anschlussvorrichtung, umfassend
- einen Leitungsabschnitt (10, 10", 10"', 10"") mit einem endständigen, nach radial außen kragenden Anlageflansch (14, 14", 14"', 14"") zur Anlage eines korrespondierenden Anlageflansches (31) eines an den Leitungsabschnitt (10, 10", 10"', 10"") anzukoppelnden, weiteren Leitungsabschnitts (30) und
- eine ringförmige Anschlussklemme (200) mit einem nach radial innen kragenden, ersten Klemmflansch (22, 22", 22"', 22"") und einem axial von diesem beabstandeten, axialen Widerlager (24, 24", 24"', 241""), die aus einem ersten und einem zweiten Halbringsegment (20, 20", 20'", 20"") aufgebaut ist, welche jeweils ein erstes und ein zweites Segmentende aufweisen, wobei das erste Segmentende des ersten Halbringsegmentes (20, 20", 20"', 20"") Rastmittel (281, 281", 281'", 281"") erster Art und das zweite Segmentende des zweiten Halbringsegmentes korrespondierende Rastmittel (282, 282", 282'", 282"") zweiter Art trägt, die in tangentialer Richtung ineinander geschoben und dadurch miteinander verrastbar sind, wobei das zweite Segmentende des ersten Halbringsegmentes (20, 20", 20"', 20"") Rastmittel (282, 282", 282'". 282"") zweiter Art und das erste Segmentende des zweiten Halbringsegmentes (20, 20", 20'", 20"") Rastmittel (281, 281", 281'", 281"") erster Art trägt, die in tangentialer Richtung ineinander geschoben und dadurch miteinander verrastbar sind, wobei der Leitungsabschnitt als ein rohrartiger Anschlussstutzen (10, 10", 10'", 10"") mit axial von der Anlagefläche (141, 141", 141"', 141"") seines Anlageflansches (14, 14", 14"', 14"") beabstandeten ersten Gewindemitteln (16, 16", 16'", 161"") ausgebildet ist
und das axiale Widerlager (24, 24", 24'", 241"") der Anschlussklemme (200) als zu den ersten Gewindemitteln (16, 16", 16"', 161"") korrespondierende, zweite Gewindemittel (24, 24", 24'", 241"") ausgebildet ist,
**dadurch gekennzeichnet, dass**
- entweder der Anschlussstutzen (10, 10", 10'") ein tangential erstrecktes erstes Linearführungselement (181, 181", 181'") und eines der Halbringsegmente (20, 20", 20'") an der Innenwandung eines seiner Segmentenden ein korrespondierendes, zweites Linearführungselement (261, 261", 261'") aufweist,
- oder der Anschlussstutzen (10"") ein radial erstrecktes erstes Linearführungselement (181"") und eines der Halbringsegmente (20"") als Teil der Wandung eines seiner Segmentenden ein korrespondierendes, zweites Linearführungselement aufweist,
wobei in beiden Fällen bei Wechselwirkung des ersten und des zweiten Linearführungselementes miteinander sowohl eine axiale Bewegung als auch eine Rotation des Halbringsegments relativ zum Anschlussstutzen eingeschränkt sind.

2. Anschlussvorrichtung nach Anspruch 1,
**dadurch gekennzeichnet,**
**dass** die beiden Halbringsegmente (20, 20", 20"', 20"") der Anschlussklemme identisch aufgebaut sind.

3. Anschlussvorrichtung, umfassend
- einen Leitungsabschnitt (10, 10", 10"', 10"") mit einem endständigen, nach radial außen kragenden Anlageflansch (14, 14", 14'", 14"") zur Anlage eines korrespondierenden Anlageflansches (31) eines an den Leitungsabschnitt (10, 10", 10"', 10"") anzukoppelnden, weiteren Leitungsabschnitts (30) und
- eine ringförmige Anschlussklemme mit einem nach radial innen kragenden, ersten Klemmflansch und einem axial von diesem beabstandeten, axialen Widerlager, die aus einem ersten und einem zweiten Halbringsegmentaufgebaut ist, welche jeweils ein erstes und ein zweites Segmentende aufweisen, wobei das erste Segmentende des ersten Halbringsegmentes Rastmittel erster Art und das zweite Segmentende des zweiten Halbringsegmentes korrespondierende Rastmittel zweiter Art trägt, die in tangentialer Richtung ineinander geschoben und dadurch miteinander verrastbar sind, wobei das zweite Segmentende des ersten Halbringsegmentes Rastmittel erster Art und das erste Segmentende des zweiten Halbringsegmentes Rastmittel zweiter Art trägt, die in tangentialer Richtung ineinander geschoben und dadurch miteinander verrastbar sind, wobei der Leitungsabschnitt als ein rohrartiger Anschlussstutzen (10, 10", 10"', 10"") mit axial von der Anlagefläche (141, 141", 141"', 141"") seines Anlageflansches (14, 14", 14"', 14"") beabstandeten ersten Gewindemitteln (16, 16", 16'", 161"") ausgebildet ist und das axiale Widerlager (24, 24", 24"', 241"") der Anschlussklemme (200) als zu den ersten Gewindemitteln (16, 16", 16'", 161"") korrespondierende, zweite Gewindemittel (24, 24", 24"', 241"") ausgebildet ist, wobei
entweder der Anschlussstutzen (10, 10", 10"') ein tangential erstrecktes erstes Linearführungselement (181, 181", 181"') und eines der Halbringsegmente (20, 20", 20'") an der Innenwandung eines seiner Segmentenden ein korrespondierendes, zweites Linearführungselement (261, 261", 261"') aufweist, oder der Anschlussstutzen (10"") ein radial erstrecktes erstes Linearführungselement (181"") und eines der Halbringsegmente (20"") als Teil der Wandung eines seiner Segmentenden ein korrespondierendes, zweites Linearführungselement aufweist,
wobei in beiden Fällen bei Wechselwirkung des ersten und zweiten Linearführungselements miteinander sowohl eine axiale Bewegung als auch eine Rotation des Halbringsegments relativ zum Anschlussstutzen eingeschränkt sind.

4. Anschlussvorrichtung nach einem der vorhergehenden Ansprüche,
**dadurch gekennzeichnet,**
**dass** das axiale Widerlager (24, 24", 24"', 241"") der Anschlussklemme als Rampenabschnitt (24, 24", 24'") oder als Schrägschlitz (241"") ausgebildet ist.

5. Anschlussvorrichtung nach einem der vorhergehenden Ansprüche,
**dadurch gekennzeichnet,**
**dass** die ersten Gewindemittel (16, 16", 16"') als über den Umfang des Anschlussstutzens verteilte Rampenabschnitte ausgebildet sind, deren Schrägen an ihren dem Anlageflansch (14, 14", 14"') abgewandten Seiten angeordnet sind, und die zweiten Gewindemittel als korrespondierend über den Umfang der Anschlussklemme (200) verteilte Rampenabschnitte (24, 24", 24'") ausgebildet sind, deren Schrägen an ihren dem Klemmflansch (22, 22", 22"') zugewandten Seiten angeordnet sind.

6. Anschlussvorrichtung nach einem der Ansprüche 1 bis 4,
**dadurch gekennzeichnet,**
**dass** die ersten Gewindemittel (161"") als eine Mehrzahl von über den Umfang des Anschlussstutzens verteilten, nach radial außen vorstehenden, lokalen Haltevorsprüngen (161"") ausgebildet sind
und die zweiten Gewindemittel (241"") als eine gleiche Mehrzahl von korrespondierend über den Umfang der Anschlussklemme (200) verteilten Schrägschlitzen (241"") in den Wandungen der Halbringsegmente (20) ausgebildet sind.

7. Anschlussvorrichtung nach einem der vorhergehenden Ansprüche,
**dadurch gekennzeichnet,**
**dass** der Anschlussstutzen (10, 10", 10"') nach radial außen wirkende, erste Sicherungs-Rastmittel (18) und eines der Halbringsegmente (20, 20", 20"') korrespondierende, nach radial innen wirkende, zweite Sicherungs-Rastmittel (29, 29", 29"') aufweist, die in wechselwirkendem Zustand einer Relativrotation der Anschlussklemme zum Anschlussstutzen in Löserichtung entgegenwirken.

8. Anschlussvorrichtung nach Anspruch 7,
**dadurch gekennzeichnet,**
**dass** die zweiten Sicherungs-Rastmittel als eine manuell lösbare Rastwippe (29", 29'") ausgebildet sind.

9. Anschlussvorrichtung nach Anspruch 7, wenn sich, in Anspruch 1 oder 3, das erste Linearführungselement tangential erstreckt,
**dadurch gekennzeichnet,**
**dass** das erste Linearführungselement als ein horizontal abstehender Flügel (18) mit einer radial abstehenden, als erstes Sicherungs-Rastmittel wirkenden Rastecke (182) ausgebildet ist und die zweiten Sicherungs-Rastmittel als ein einem nach radial innen aus der Wandung des zugeordneten Haibringsegmentes (20) vorspringenden Endanschlag (27) benachbarter, ebenfalls nach radial innen aus der Wandung des zugeordneten Hatbringsegmentes (20) vorspringender Sicherungs-Rastbuckel (29) ausgebildet sind.

10. Anschlussvorrichtung nach einem der Ansprüche 1 bis 8, wenn sich, in Anspruch 1 oder 3, das erste Linearführungselement radial erstreckt,
**dadurch gekennzeichnet,**
**dass** das erste Linearführungselement (181"") als ein radial nach außen vorstehender, lokaler Haltevorsprung ausgebildet ist und das zweite Linearführungselement (261"") als eine Ausnehmung nach Art eines Schrägschlitzes ausgebildet ist, wobei der Schrägschlitz an einer seiner kurzen Seiten eine Durchtrittsöffnung für das erste Linearführungselement (181"") aufweist.

## Claims

1. A connection device comprising
- a line section (10, 10", 10"', 10"") having, at its end, a radially outwardly protruding abutment flange (14, 14", 14"', 14"") for butting against a corresponding abutment flange (31) of a further line section (30) to be coupled to said line section (10, 10", 10"', 10""), and
- an annular connection clamp (200) having a radially inwardly protruding first clamping flange (22, 22", 22"', 22"") and an axial abutment (24, 24", 24"', 241"") spaced apart axially from said first clamping flange, and being made up of a first and a second half-ring segment (20, 20", 20"', 20""), each of which having a first and a second segment end, wherein the first segment end of the first half-ring segment (20, 20", 20'", 20"") has latching means (281, 281", 281"', 281"") of a first type and the second segment end of the second half-ring segment has corresponding latching means (282, 282", 282"', 282"") of a second type, which are pushed into one another in a tangential direction, thereby being latchable together, wherein the second segment end of the first half-ring segment (20, 20", 20'", 20"") has latching means (282, 282", 282"', 282"") of the second type and the first segment end of the second half-ring segment has latching means (281, 281", 281"', 281'"") of the first type, which are pushed into one another in a tangential direction, thereby being latchable together,
wherein the line section is designed in the form of a tubular connection stub (10, 10", 10"', 10"") having first thread means (16, 16", 16'", 161"") spaced apart axially from the abutment surface (141, 141", 141'", 141"") of its abutment flange (14, 14", 14"', 14""), and the axial abutment (24, 24", 24"', 241"") of the connection clamp (200) is embodied as second thread means (24, 24", 24'", 241"") corresponding to the first thread means (16, 16", 16"', 161""), **characterized in that**
either the connection stub (10, 10", 10'") has a tangentially extending first linear guide element (181, 181", 181"') and one of the half-ring segments (20, 20", 20"') has a corresponding second linear guide element (261, 261", 261"') on the interior wall of one of its segment ends,
or the connection stub (10"") has a radially extending first linear guide element (181"") and one of the half-ring segments (20"") has, as a part of the wall of one of its segment ends, a corresponding second linear guide element (261""),
wherein in both cases during an interaction of the first and second linear guide element both an axial movement and a rotation of the half-ring segment relative to the connection stub are restricted.

2. The connection device according to claim 1,
**characterized in that**
the two half-ring segments (20, 20", 20'". 20"") of the connection clamp are built identically.

3. A connection device comprising
- a line section (10, 10", 10'", 10"") having, at its end, a radially outwardly protruding abutment flange (14, 14", 14"', 14"") for butting against a corresponding abutment flange (31) of a further line section (30) to be coupled to said line section (10, 10", 10'", 10""), and
- an annular connection clamp having a radially inwardly protruding first clamping flange and an axial abutment spaced apart axially from said first clamping flange, and being made up of a first and a second half-ring segment, each of which having a first and a second segment end, wherein the first segment end of the first half-ring segment has latching means of a first type and the second segment end of the second half-ring segment has corresponding latching means of a second type, which are pushed into one another in a tangential direction, thereby being latchable together, wherein the second segment end of the first half-ring segment has latching means of the first type and the first segment end of the second half-ring segment has latching means of the second type, which are pushed into one another in a tangential direction, thereby being latchable together,
wherein the line section is designed in the form of a tubular connection stub (10, 10", 10"', 10"") having first thread means (16, 16", 16"', 161"") spaced apart axially from the abutment surface (141, 141", 141'", 141"") of its abutment flange (14, 14", 14"', 14""), and the axial abutment (24, 24", 24"', 241"") of the connection clamp (200) is embodied as second thread means (24, 24", 24"', 241"") corresponding to the first thread means (16, 16", 16"', 161""),
wherein either the connection stub (10, 10", 10"') has a tangentially extending first linear guide element (181, 181", 181"') and one of the half-ring segments (20, 20", 20"') has a corresponding second linear guide element (261, 261", 261'") on the interior wall of one of its segment ends,
or the connection stub has a radially extending first linear guide element (181""), and one of the half-ring segments (20"") has, as a part of the wall of one of its segment ends, a corresponding second linear guide element (261""),
wherein in both cases during an interaction of the first and second linear guide element both an axial movement and a rotation of the half-ring segment relative to the connection stub are restricted.

4. The connection device according to any of the preceding claims,
**characterized in that**
the axial abutment (24, 24", 24"', 241"") of the connection clamp is embodied as a ramp section (24, 24", 24'") or as a slanted slot (241"").

5. The connection device according to any of the preceding claims,
**characterized in that**
the first thread means (16, 16", 16"") are designed as ramp sections distributed around the circumference of the connection stub, the sloped surfaces of which ramp sections are arranged on the sides of the latter facing away from the abutment flange (14, 14", 14""), and the second thread means are designed as ramp sections (24, 24", 24"") correspondingly distributed around the circumference of the connection clamp (200), the sloped surfaces of which are arranged on the sides of the ramp sections facing towards the clamping flange (22, 22", 22"").

6. The connection device according to any of claims 1 to 4,
**characterized in that**
the first thread means (161"") are embodied as a plurality of local holding lugs (161"") distributed over the circumference of the connection stub and projecting radially outwards, and the second thread means (241"") are embodied as an identical plurality of slanted slots (241"") in the walls of the half-ring segment (20), which are correspondingly distributed over the circumference of the connection clamp (200).

7. The connection device according to any of the preceding claims,
**characterized in that**
the connection stub (10, 10", 10"') has first safety latching means (18) acting radially outwards, and one of the half-ring segments (20, 20", 20"') has corresponding second safety latching means (29, 29", 29"') acting radially inwards which, in their interacting state, counteract a rotation of the connection clamp relative to the connection stub in the release direction.

8. The connection device according to claim 7,
**characterized in that**
the second safety latching means are embodied as a manually releasable latching rocker (29", 29'").

9. The connection device according to claim 7 if, in claim 1 or 3, the first linear guide element extends in a tangential direction,
**characterized in that**
the first linear guide element is embodied as a horizontally projecting wing (18) with a radially projecting latching corner (182) acting as a first safety latching means, and the second safety latching means are embodied as a safety latching boss (29) that protrudes radially inwards from the wall of the associated half-ring segment (20) and are adjacent to an end stop (27) also protruding radially inwards from the wall of the associated half-ring segment (20).

10. The connection device according to any of claims 1 to 8 if, in claim 1 or 3, the first linear guide element extends in a radial direction,
**characterized in that**
the first linear guide element (181"") is embodied as a local holding lug protruding radially outwards and that the second linear guide element (261"") is embodied as a recess in the manner of a slanted slot, wherein the slanted slot has on its short side a through-opening for the first linear guide element (181"").

## Revendications

1. Dispositif de raccordement, comportant
- une section de conduite (10, 10", 10"', 10"") dotée, à son extrémité, d'une bride de butée (14, 14", 14'", 14"") faisant saillie radialement vers l'extérieur pour buter contre une bride de butée (31) correspondante d'une autre section de conduite (30) devant être accouplée à la section de conduite (10, 10", 10"', 10"") et
- un collier de raccordement (200) annulaire, ayant une première bride de serrage (22, 22", 22"', 22"") faisant saillie radialement vers l'intérieur et une butée (24, 24", 24"', 241"") axiale, espacée axialement de celle-ci, ledit collier de raccordement étant composé d'un premier segment semi-circulaire et d'un second segment semi-circulaire (20, 20", 20"', 20""), présentant chacun une première et une seconde extrémité de segment, sachant que la première extrémité de segment du premier segment semi-circulaire (20, 20", 20"', 20"") supporte des moyens d'encliquetage (281, 281", 281"'. 281"") de premier type et que la seconde extrémité de segment du second segment semi-circulaire supporte des moyens d'encliquetage (282, 282", 282"', 282"") correspondants de second type, qui s'emboîtent les uns dans les autres dans un sens tangentiel et peuvent ainsi s'encliqueter les uns avec les autres, sachant que la seconde extrémité de segment du premier segment semi-circulaire (20, 20", 20"', 20"") supporte des moyens d'encliquetage (282, 282", 282"', 282"") de second type et que la première extrémité de segment du second segment semi-circulaire (20, 20", 20"', 20"") supporte des moyens d'encliquetage (281, 281", 281"', 281"") de premier type, qui s'emboîtent les uns dans les autres dans un sens tangentiel et peuvent ainsi s'encliqueter les uns avec les autres,
sachant que la section de conduite est réalisée sous forme d'un embout de raccordement (10, 10", 10'", 10"") tubulaire doté de premiers moyens filetés (16, 16", 16"', 161"") espacés axialement de la surface d'appui (141, 141", 141'", 141"") de sa bride de butée (14, 14", 14'", 14"") et que la butée (24, 24", 24"', 241"") axiale du collier de raccordement (200) est réalisé sous forme des seconds moyens filetés (24, 24", 24'", 241"") correspondant aux premiers moyens filetés (16, 16", 16'", 161"").
**caractérisé en ce que**
soit l'embout de raccordement (10, 10", 10"') comporte un premier élément de guidage linéaire (181, 181", 181"') s'étendant tangentiellement et que l'un des segments semi-circulaires (20, 20", 20'") comporte un second élément de guidage linéaire (261, 261", 261"') correspondant sur la paroi interne d'une de ses extrémités de segment,
ou bien l'embout de raccordement (10"" comporte] un premier élément de guidage linéaire (181"") s'étendant radialement et que l'un des segments semi-circulaires (20"") comporte un second élément de guidage linéaire (261"") correspondant faisant partie de la paroi d'une de ses extrémités de segment,
sachant que, dans les deux cas, lors de l'interaction du premier élément de guidage linéaire avec le second élément de guidage linéaire, à la fois un déplacement axial et une rotation du segment semi-circulaire par rapport à l'embout de raccordement sont restreints.

2. Dispositif de raccordement selon la revendication 1,
**caractérisé en ce**
**que** les deux segments semi-circulaires (20, 20", 20"', 20"") du collier de raccordement sont constitués de façon identique.

3. Dispositif de raccordement, comportant
- une section de conduite (10, 10", 10"', 10"") dotée, à son extrémité, d'une bride de butée (14, 14", 14"', 14"") faisant saillie radialement vers l'extérieur pour buter contre une bride de butée (31) correspondante d'une autre section de conduite (30) devant être accouplée à la section de conduite (10, 10", 10'", 10"") et
- un collier de raccordement annulaire, ayant une première bride de serrage faisant saillie radialement vers l'intérieur et une butée axiale, espacé axialement de celle-ci, ledit collier de raccordement étant composé d'un premier segment semi-circulaire et d'un second segment semi-circulaire, présentant chacun une première et une seconde extrémité de segment, sachant que la première extrémité de segment du premier segment semi-circulaire supporte des moyens d'encliquetage de premier type et que la seconde extrémité de segment du second segment semi-circulaire supporte des moyens d'encliquetage correspondants de second type, qui s'emboîtent les uns dans les autres dans un sens tangentiel et peuvent ainsi s'encliqueter les uns avec les autres, sachant que la seconde extrémité de segment du premier segment semi-circulaire supporte des moyens d'encliquetage de premier type et que la première extrémité de segment du second segment semi-circulaire supporte des moyens d'encliquetage de second type, qui s'emboîtent les uns dans les autres dans un sens tangentiel et peuvent ainsi s'encliqueter les uns avec les autres, sachant que la section de conduite est réalisée sous forme d'un embout de raccordement (10, 10", 10"', 10"") tubulaire, dotée de premiers moyens filetés (16, 16", 16"', 161"") espacés axialement de la surface d'appui (141, 141", 141"', 141"") de sa bride de butée (14, 14", 14"', 14"") et que la butée (24, 24", 24"', 241"") axiale du collier de raccordement (200) est réalisé sous la forme des seconds moyens filetés (24, 24", 24"', 241"") correspondant aux premiers moyens filetés (16, 16", 16"', 161""),
sachant que soit l'embout de raccordement (10, 10", 10"') comporte un premier élément de guidage linéaire (181, 181", 181"') s'étendant tangentiellement et que l'un des segments semi-circulaires (20, 20", 20"') comporte un second élément de guidage linéaire (261, 261", 261'") correspondant sur la paroi interne d'une de ses extrémités de segment,
ou bien ledit embout de raccordement comporte un premier élément de guidage linéaire (181"") s'étendant radialement et l'un des segments semi-circulaires (20"") comporte un second élément de guidage linéaire correspondant faisant partie de la paroi d'une de ses extrémités de segment,
sachant que, dans les deux cas, lors de l'interaction du premier élément de guidage linéaire avec le second élément de guidage linéaire, à la fois un déplacement axial et une rotation du segment semi-circulaire par rapport à l'embout de raccordement sont restreints.

4. Dispositif de raccordement selon l'une des revendications précédentes,
**caractérisé en ce**
**que** la butée (24, 24", 24"', 241"") axiale du collier de raccordement est réalisé sous la forme d'une section de rampe (24, 24", 24"') ou d'une fente inclinée (241"").

5. Dispositif de raccordement selon l'une des revendications précédentes,
**caractérisé en ce**
**que** les premiers moyens filetés (16, 16", 16"') sont réalisés sous forme de sections de rampe réparties sur la périphérie de l'embout de raccordement, dont les pentes sont placées sur leurs côtés opposés à la bride de butée (14, 14", 14"'), et que les seconds moyens filetés sont réalisés sous forme de sections de rampe (24, 24", 24"') réparties de manière correspondante sur la périphérie du collier de raccordement (200), dont les pentes sont placées sur leurs côtés tournés vers la bride de serrage (22, 22", 22"').

6. Dispositif de raccordement selon l'une des revendications 1 à 4,
**caractérisé en ce**
**que** les premiers moyens filetés (161"") sont réalisés sous la forme d'une pluralité de saillies de retenue locales (161"") saillant radialement vers l'extérieur et répartis sur la périphérie de l'embout de raccordement et que les seconds moyens filetés (241"") sont réalisés sous la forme d'une même pluralité de fentes inclinées (241"") dans les parois des segments semi-circulaires (20), réparties de manière correspondante sur la périphérie du collier de raccordement (200).

7. Dispositif de raccordement selon l'une des revendications précédentes,
**caractérisé en ce**
**que** l'embout de raccordement (10, 10", 10"') comporte des premiers moyens d'encliquetage de sécurité (18) agissant radialement vers l'extérieur et que l'un des segments semi-circulaires (20, 20", 20"') comporte des seconds moyens d'encliquetage de sécurité (29, 29", 29"') correspondants, agissant radialement vers l'intérieur, qui contrecarrent, à l'état interactif, une rotation relative du collier de raccordement par rapport à l'embout de raccordement dans le sens du desserrage.

8. Dispositif de raccordement selon la revendication 7,
**caractérisé en ce**
**que** les seconds moyens d'encliquetage de sécurité sont réalisés sous la forme d'une manette d'encliquetage (29", 29"') à desserrage manuel.

9. Dispositif de raccordement selon la revendication 7, si le premier élément de guidage linéaire selon la revendication 1 ou 3 s'étend tangentiellement,
**caractérisé en ce**
**que** le premier élément de guidage linéaire est réalisé sous la forme d'une aile (18) espacée horizontalement, comportant un angle d'encliquetage (182) espacé radialement, agissant comme un premier moyen d'encliquetage de sécurité, et que les seconds moyens d'encliquetage de sécurité sont réalisés sous la forme d'une bosse d'encliquetage de sécurité (29) faisant saillie de la paroi du segment semi-circulaire (20) associé, radialement vers l'intérieur, qui est adjacente à une butée de fin de course (27) faisant saillie également radialement vers l'intérieur de la paroi du segment semi-circulaire (20) associé.

10. Dispositif de raccordement selon l'une des revendications 1 à 8, si le premier élément de guidage linéaire selon la revendication 1 ou 3 s'étend radialement,
**caractérisé en ce**
**que** le premier élément de guidage linéaire (181"") est réalisé sous la forme d'une saillie de retenue saillant radialement vers l'extérieur, et que le second élément de guidage linéaire (261"") est réalisé sous la forme d'un évidement à la manière d'une fente inclinée, ladite fente inclinée comportant une ouverture de passage pour le premier élément de guidage linéaire (181"") sur un de ses côtés courts.
